# EUROPÄISCHE PATENTSCHRIFT

(11) **EP 3 332 733 B1**
(45) Veröffentlichungstag und Bekanntmachung des Hinweises auf die Patenterteilung: **06.02.2019**
(21) Anmeldenummer: 16203186.8
(22) Anmeldetag: 09.12.2016
(51) Int. Cl.: A61C 8/00

(54) **ZWEITEILIGER ADAPTER ZUM EINBRINGEN EINES DENTALIMPLANTATS**
TWO-PART ADAPTER FOR INSERTING A DENTAL IMPLANT
ADAPTATEUR EN DEUX PARTIES DESTINÉ À INTRODUIRE UN IMPLANT DENTAIRE

(43) Veröffentlichungstag der Anmeldung: 13.06.2018
(73) Patentinhaber: Charité - Universitätsmedizin Berlin, 10117 Berlin (DE)
(72) Erfinder: SCHWITALLA, Andreas, 10435 Berlin (DE); MÜLLER, Wolf-Dieter, 12524 Berlin (DE)
(74) Vertreter: Hertin und Partner Rechts- und Patentanwälte PartG mbB

(56) Entgegenhaltungen:
- WO-A1-2012/048441
- WO-A1-2014/053218
- WO-A1-2014/068561
- US-A1- 2013 230 825

## Beschreibung

### Gegenstand der Erfindung

Die vorliegende Erfindung beschreibt einen zweiteiligen Adapter zum Einbringen eines Dentalimplantats in den Knochen, wobei der erste Teil ein länglicher Adapter ist, an dessen apikalem Teil mindestens ein Schnappverschluss vorhanden ist, der bei Anordnung des apikalen Teils des Adapter in einer koronalen Ausnehmung des Dentalimplantats in mindestens eine komplementäre Struktur an der Innenseite der Ausnehmung des Dentalimplantats einrastet und eine reversible Steckverbindung zwischen Adapter und Dentalimplantat herstellt, und der zweite Teil ein Konter-Ring ist, in dessen zentraler Ausnehmung der apikale Teil des Adapters angeordnet ist.

### Stand der Technik

Für den Ersatz menschlicher Zähne existieren unterschiedliche Zahnersatzlösungen. Bei einem Implantatsystem wird ein Zahnimplantat in den menschlichen Kieferknochen eingesetzt und dient als künstliche Zahnwurzel der Befestigung von prothetischen Komponenten wie z.B. einem Aufbauteil oder Abutment. Die Verwendung von Dentalimplantaten als künstlichen Ersatz für Zahnwurzeln hat sich in den letzten Jahren etabliert. Es gibt verschiedene Formen von Dentalimplantaten, wobei sich insbesondere die schraubenförmigen Implantate bewährt haben.

Schraubenförmige Dentalimplantate bestehen üblicherweise aus einem Verankerungsteil zur Verankerung des Implantats im Knochen und einem Aufbauteil, auf dem eine Suprakonstruktion, beispielsweise eine Krone, befestigt werden kann. Wenn Verankerungsteil und Aufbauteil als ein einziges Bauteil ausgebildet sind, spricht man von einem einteiligen Implantat. Meistens werden zweiteilige Implantate verwendet, bei denen Verankerungsteil und Aufbauteil als zwei separate Bauteile ausgebildet sind.

Zum Fixieren eines schraubenförmigen Dentalimplantats im Knochen wird das Implantat in ein passendes Bohrloch mit vorbereiteter Innengewindebohrung eingedreht oder es besitzt ein selbstschneidendes Außengewinde, das beim Eindrehen in ein präpariertes Sackloch ein Innengewinde selbst erzeugt. Zylinderimplantate hingegen haben an ihrer Außenseite kein Gewinde und werden in ein im Knochen vorbereitetes Sackloch eingedrückt. Die Entnahme des Implantats aus seinem Aufnahmebehälter und das Einsetzen müssen unter sterilen Bedingungen erfolgen.

Um das Eindrehen eines Dentalimplantats in den Knochen zu ermöglichen, weisen konventionelle Implantate im Bereich des Verankerungsteils und/oder des Aufbauteils üblicherweise eine zentrale Ausnehmung auf, an deren Innenwand ein Innengewinde vorhanden ist. Dieses kann zur Befestigung eines verschraubbaren Adapters genutzt werden, an dem ein Einbringinstrument, beispielsweise ein Eindrehwerkzeug, zum Übertragen eines Torsionsmoments auf das Implantat befestigt werden kann. Solche verschraubbaren Adapter sind beispielsweise aus EP 1 038 506 bekannt.

Zudem wurde in der US-Patentanmeldung US 2013/230825 A1 ein länglicher Adapter mit apikalen Schnappverschlüssen zur Verbindung mit einem Dentalimplantat beschrieben. Dieser Adapter kann zudem einen Dichtungsring aus Kunststoff umfassen, der unterhalb der Kopfstruktur des Adapters in einer umlaufenden Vertiefung fixiert ist und als Sicherheitselement fungiert.

Üblicherweise sind Implantate bereits in ihrer sterilen Verpackung mit einem solchen Adapter verbunden, so dass das Implantat mittels des Adapters aus der Verpackung entnommen werden kann. Hierzu kann der Adapter bereits bei der Entnahme aus der Verpackung mit einem geeigneten Einbringwerkzeug verbunden werden und so auf das Bohrloch bzw. Sackloch, also die Stelle, an der es in den Knochen eingesetzt werden soll, aufgesetzt und eingebracht werden.

Zum Einbringen wird auf den am Implantat verankerten Adapter ein Torsionsmoment mittels eines Einbringwerkzeugs ausgeübt, wie beispielsweise einer Ratsche. Anschließend wird der Adapter wieder vom Dentalimplantat gelöst, indem die zentrale Schraube, die zur Fixierung des Adapters am Implantat dient, herausgedreht bzw. geschraubt wird.

Das Lösen dieser im Innengewinde des Implantats fixierten Adapterschraube ist zeitaufwändig und es besteht die Gefahr, dass es während dieses Vorgangs des Herausdrehens zu Verunreinigungen des Implantats kommt, die eine mikrobielle Besiedlung des Implantats begünstigen, wenn die Handhabung nicht sehr sorgfältig erfolgt. Zudem besteht die Gefahr, dass durch die Manipulation beim Herausdrehen der Adapterschraube die Position des Implantats im Knochen unvorteilhaft verändert wird. Diese Gefahr ist besonders dann gegeben, wenn das Implantat nach dem Einbringen in den Knochen nicht fest fixiert ist.

Da bei bekannten Adaptern oft ein zentraler Schraubenkanal vorhanden ist, der für die Fixierung des Adapters am Implantat über die zentrale Adapterschraube notwendig ist, kommt es aufgrund dieser Bauteilgeometrie zu einer Schwächung des Adapters, so dass dieser bei höheren Drehmomenten aufgrund eines sehr harten Knochens versagen kann (z.B. Bruch). Diese Bruchgefahr ist umso mehr gegeben, wenn der Adapter aus Kunststoff hergestellt wurde.

Nach Einbringung des Implantats mit Hilfe eines verschraubten Adapters ist zudem oft ein erhöhter Kraftaufwand notwendig, um die zentrale Adapterschraube zu lösen, um den Adapter zu entfernen. Dabei besteht eine erhöhte Bruchgefahr der Adapterschraube. Wenn es zum Schraubenbruch kommt, gestaltet sich das Entfernen eines Schraubenfragmentes aus dem Innengewinde sehr zeitaufwendig und es besteht ein hohes Risiko, dass das Implantat in der zentralen Ausnehmung beschädigt bzw. zerkratzt wird.

Zudem besteht die Gefahr, dass beim Einbringen des Implantates mit Hilfe eines verschraubten Adapters die zentrale Fixationsschraube bricht, wenn durch unsachgemäßes Manipulieren der Adapter im Verhältnis zum Implantat eine seitliche Belastung erfährt.

Ein weiterer Nachteil beim Lösen der zentralen Adapterschraube besteht darin, dass oftmals kein Platz zwischen Ober- und Unterkiefer für den Schraubendreher vorhanden ist, um die Adapterschraube zu lösen. Dies betrifft in besonderem Maße die hinteren Bereiche der Mundhöhle. Es kommt hinzu, dass die komplizierten und zeitaufwendigen Drehbewegungen, die mit den Fingern auf den Schraubendreher übertragen werden müssen, ausschließen, dass man diesen stets in sicherem Griff hat. Dadurch steigt die Gefahr, dass dieser abrutschen und vom Patienten in die Lunge aspiriert werden kann. Dies gilt in gleichem Maße für den Adapter bzw. die Adapterschraube, wenn diese Bauteile keine sichere Steckverbindung mit dem Schraubendreher eingehen.

### Aufgabe der Erfindung

Aufgabe der Erfindung ist es daher, einen gegenüber dem Stand der Technik verbesserten Adapter zum sterilen Herausnehmen eines Implantats aus der Verpackung und anschließenden Einbringen des Implantats in den Knochen bereitzustellen. Der erfindungsgemäße Adapter sollte eine schnelle, einfache und sichere Handhabung bei der Trennung von Implantat und Adapter nach Einsetzen des Implantats in den Knochen ermöglichen. Die Trennung des Adapters vom Implantat sollte möglichst keine oder zumindest nur eine geringe mechanische Belastung auf das eingesetzte Implantat und den Knochen verursachen. Besonders zu vermeiden ist dabei das Einwirken von Kräften, die nicht in der Axialrichtung des Dentalimplantats wirken.

### Allgemeine Beschreibung der Erfindung

Die oben beschriebene technische Aufgabe wird erfindungsgemäß gelöst durch die Bereitstellung einer zweiteiligen Vorrichtung zum Einbringen eines Dentalimplantats in einen Knochen, wobei
- ein erster Teil ein länglicher Adapter ist, an dessen apikalem Teil mindestens ein Schnappverschluss vorhanden ist, der bei Anordnung des apikalen Teils des Adapters in einer koronalen Ausnehmung des Dentalimplantats in eine komplementäre Struktur an der Innenseite der Ausnehmung des Dentalimplantats einrastet und eine reversible Steckverbindung zwischen Adapter und Dentalimplantat herstellt, und
- ein zweiter Teil ein Konter-Ring ist, in dessen zentraler Ausnehmung der apikale Teil des Adapters angeordnet ist,
   und die Vorrichtung **dadurch gekennzeichnet** ist, dass der Konter-Ring entlang der Axialrichtung des Adapters beweglich ist.

Im Sinne der vorliegenden Erfindung kann die erfindungsgemäße zweiteilige Vorrichtung auch als zweiteiliger Adapter bezeichnet werden. Die vorliegende Erfindung umfasst entsprechend als ersten Teil des erfindungsgemäßen zweiteiligen Adapters einen Adapter, der mit einem Dentalimplantat über einen Schnappverschluss verbunden werden kann. Der Anwender kann das Implantat mit Hilfe eines Einbringinstrumentes, das eine Steckverbindung mit dem Adapter eingeht, sicher steril aus der Verpackung nehmen und in den Knochen einbringen, ohne das Implantat direkt zu berühren.

Die Steckverbindung bzw. Schnappverbindung zwischen Adapter und Implantat wird durch mindestens einen Schnappverschluss hergestellt, der am apikalen Teil des Adapters ausgebildet ist. Der Schnappverschluss kann hierbei in allen Bereichen des apikalen Teils des Adapters ausgebildet sein. Beispielsweise kann der Schnappverschluss als ein in Längsrichtung des Adapters nach apikal gerichteter Fortsatz ausgebildet sein, der vom apikalen Ende des Adapters entspringt. Ein solcher Fortsatz, aber auch ein Schnappverschluss, der in anderen Bereichen des apikalen Teils des Adapters ausgebildet ist, kann elastisch bzw. federnd ausgebildet sein, so dass er sich beispielsweise nach innen, also zur Mittelachse des Adapters hin verbiegen lässt, wenn von außen eine Kraft auf den Schnappverschluss ausgeübt wird. In anderen Ausführungsformen ist der Schnappverschluss nicht als federnde Struktur am apikalen Teil des Adapters ausgestaltet, sondern umfasst lediglich eine Struktur im apikalen Teil des Adapters, wie beispielsweise eine Verbreiterung oder eine Vertiefung, die in eine komplementäre Struktur an der Innenseite der koronalen Ausnehmung des Dentalimplantats einrastet. Die notwendige Verformung des Schnappverschlusses bzw. der komplementären Strukturen an der Innenseite der koronalen Ausnehmung des Dentalimplantats, die beim Einführen des apikalen Teils des Adapters in die koronale Ausnehmung des Dentalimplantats vor dem Einrasten des Schnappverschlusses erfolgt, kann hierbei beispielsweise durch elastische Eigenverformung des Materials des Adapters und/oder des Dentalimplantats ermöglicht werden. In bevorzugten Ausführungsformen der Erfindung sind zwei, drei oder mehr Schnappverschlüsse ausgebildet. In Ausführungsformen des Adapters mit mehreren Schnappverschlüssen können die Schnappverschlüsse zirkulär symmetrisch um die Längsachse des Adapters angeordnet sein.

Ein erfindungsgemäßer zweiteiliger Adapter, der mit einem Implantat verbunden ist, lässt sich nach dem Einbringen des Implantats in den Knochen durch das Wirken einer nach koronal gerichteten Zugkraft von dem Implantat trennen. Das Einwirken der Zugkraft auf den Adapter führt zu einer Verformung des Schnappverschlusses und/oder der komplementären Strukturen an der Innenseite der koronalen Ausnehmung des Dentalimplantats, beispielsweise durch Zurückfedern des Schnappverschlusses oder elastische Eigenverformung des Materials des Adapters, wenn der Schnappverschluss am Unterschnitt an der Innenseite des Implantats vorbeigezogen wird.

Es ist besonders vorteilhaft, dass sich die Trennung durch eine einzelne Bewegung ausführen lässt und sehr schnell nach Einwirken der Zugkraft erfolgt, wobei der Anwender die Teile stets sicher im Griff hat. Ein weiterer Vorteil des erfindungsgemäßen Adapters ist, dass Krafteinwirkungen in Richtungen, die von der Axial- bzw. Längsrichtung des Adapters abweichen, während des Lösens der Wirkverbindung zwischen Adapter und Implantat bei sachgerechter Handhabung nicht auftreten. Dies gewährleistet bevorzugt eine geringe mechanische Belastung des Knochens und des Implantats während des Trennvorgangs und ermöglicht, dass das Implantat seine Position während des Trennvorgangs im Wesentlichen nicht verändert.

Bisher wurde die Verbindung zwischen einem Adapter und einem Implantat mit Innengewinde durch das Einschrauben der Adapterschraube in das Innengewinde des Dentalimplantats hergestellt. Diese Art der Verbindung geht aber mit den beschriebenen Nachteilen beim Lösen der Verbindung einher. Diese Nachteile wurden bisher nicht überwunden, obwohl die Problematik lange bekannt war, da die Notwendigkeit der Herstellung einer Schraubverdingung aufgrund des vorhandenen Innengewindes als gegeben angesehen wurde. Zudem ging man davon aus, dass nur eine Schraubverbindung für die erforderliche Stabilität sorgen kann. Der erfindungsgemäße Adapter stellt daher eine überraschende und vorteilhafte Lösung des Problems dar, einen Adapter bereitzustellen, der eine schnelle, einfache und sichere Handhabung bei der Trennung von Implantat und Adapter nach Einsetzen des Implantats in den Knochen ermöglicht und trotzdem stabil mit dem Implantat verbunden ist.

Ein Vorteil des erfindungsgemäßen zweiteiligen Adapters ist, dass der Konter-Ring, der den zweiten Teil des erfindungsgemäßen Adapters darstellt, nach Einbringen des Implantats in den Knochen mit Hilfe des erfindungsgemäßen zweiteiligen Adapters zur Fixierung des Implantats in seiner Position im Knochen genutzt werden kann, während der erste Teil des Adapters mittels einer nach koronal wirkenden Zugkraft vom Implantat getrennt werden kann. Hierbei wird der Konter-Ring nach dem Einbringen des Implantats in den Knochen auf dem koronalen Ende des Implantats (der Implantat-Schulter) durch eine am Konter-Ring angreifende Kraft fixiert, während der erste Teil des erfindungsgemäßen zweiteiligen Adapters durch eine nach koronal wirkende Kraft aus der koronalen Ausnehmung des Implantats herausgezogen wird. Durch die Fixierung des Konter-Rings auf der Implantat-Schulter verändert das Implantat bei diesem Vorgang seine Position nicht. Durch den Einsatz des Konter-Ring wird somit die Gefahr der Positionsveränderung des Implantats überraschend minimiert. Weiterhin wird die mechanische Belastung für den Knochen und das Implantat minimiert. Mithilfe des erfindungsgemäßen zweiteiligen Adapters ist es sogar möglich, den ersten Teil des Adapters von einem in den Knochen eingebrachten Implantat zu lösen, wenn das Implantat nicht fest im Knochen verankert ist.

Ein weiterer Vorteil des Konter-Rings ist, dass er es ermöglicht, das Implantat im Knochen zu fixieren, ohne dass zusätzliche Instrumente direkt am Implantat ansetzen müssen, um dieses während der Trennung vom ersten Teil des erfindungsgemäßen Adapters im Knochen zu fixieren, wie dies bei bekannten Adapter-Implantat-Lösungen der Fall ist. Durch das Ansetzen von Fixierungsinstrumenten am Implantat können Beschädigungen auftreten, die das Implantat brüchig machen und somit seine Haltbarkeit und Stabilität unter Belastung negativ beeinflussen. Zudem können solche Beschädigungen, die oft in Form von Kratzern oder Rissen in der Implantat-Oberfläche auftreten, die Ansiedlung von Bakterien und anderen Mikroorganismen am Implantat fördern, was sich negativ auf die Funktion des Implantats, aber auch auf die Funktion und Gesundheit der angrenzenden Strukturen im Mundraum, wie beispielsweise die benachbarten Zähne, das angrenzende Zahnfleisch und den angrenzenden Knochen, auswirkt. Zudem stellen Infektionen und Besiedelungen mit Mikroorganismen eine Gefahr für die allgemeine Gesundheit dar, da es beispielsweise im Falle einer Immunsuppression zu einer systemischen Ausbreitung der Infektion kommen kann.

Zusätzlich verleiht die Verwendung des Konter-Rings, der zur Fixierung des Implantats in seiner Position im Knochen während der Trennung der Verbindung von Adapter und Implantat genutzt wird, dem Anwender mehr Sicherheit bei seiner Arbeit, da er eine mögliche Positionsänderung des Implantats durch den Trennungsvorgang mit Hilfe des Konter-Rings verhindern kann. Dies ermöglicht gleichzeitig eine schnellere Arbeitsweise, da vor der Trennung der Verbindung von Adapter und Implantat nicht überprüft werden muss, ob die Verankerung des Implantats im Knochen der Krafteinwirkung des Trennvorgangs standhalten würde. Hierdurch wird die Anzahl der Arbeitsschritte zum Einbringen des Implantats in den Knochen verringert, was das Risiko der Verunreinigung und der mikrobiellen Besiedlung des Implantats minimiert. Es war überraschend, dass die genannten Vorteile durch die Hinzunahme eines Konter-Rings in die Anordnung von Implantat und Adapter erzielt werden konnten.

In einer bevorzugten Ausführungsform des erfindungsgemäßen zweiteiligen Adapters umfasst der Schnappverschluss am apikalen Teil des Adapters, der den ersten Teil des erfindungsgemäßen zweiteiligen Adapters darstellt, eine von einer Axialrichtung des Adapters nach außen gerichtete Verbreiterung, wobei die Verbreiterung bei Anordnung des apikalen Teils des Adapter in der koronalen Ausnehmung des Dentalimplantats in einen Unterschnitt an der Innenseite der Ausnehmung des Dentalimplantats einrastet. Der Schnappverschluss ist bevorzugt so ausgebildet, dass er eine Verbreiterung aufweist, die nach außen, also senkrecht zur Axialrichtung des Adapters von der Mittelachse weg gerichtet ist. Wenn der Adapter in dieser bevorzugten Ausführungsform mit seinem apikalen Teil in die koronale Ausnehmung des Dentalimplantats eingeführt wird, kommt die Verbreiterung des Schnappverschlusses mit einem Unterschnitt an der Innenwand des Dentalimplantats in Kontakt, der die koronale Ausnehmung verengt. Bei Fortführung der Einführbewegung des Adapters in die Ausnehmung des Implantats wird der Schnappverschluss daher nach innen gebogen, solange, bis die Verbreiterung des Schnappverschlusses am Unterschnitt des Implantats vorbeigeschoben wurde. In diesem Moment verschiebt sich der Schnappverschluss zurück in seine Ausgangsposition und ist in den Unterschnitt an der Innenseite der Ausnehmung des Dentalimplantats eingerastet und hierdurch mit dem Implantat verbunden.

Ein überraschender Vorteil dieser bevorzugten Ausführungsform des Adapters, der den ersten Teil des erfindungsgemäßen zweiteiligen Adapters darstellt, ist, dass er mit praktisch allen existierenden Dentalimplantaten kompatibel ist, die eine koronale Ausnehmung aufweisen, an deren Innenseite ein Innengewinde vorhanden ist, das eigentlich für die Befestigung von prothetischen Komponenten vorgesehen ist. Dabei kann die Verengung der koronalen Ausnehmung, die den für das Einrasten der nach außen gerichteten Verbreiterung des Schnappverschlusses notwendigen Unterschnitt bildet, durch das Innengewindes an der Innenseite der Ausnehmung des Dentalimplantats gebildet werden. Alternativ kann auch jeder andere Unterschnitt, der sich an der Innenwand der zentralen Ausnehmung des Dentalimplantats befindet, für die Herstellung der Wirkverbindung zwischen Adapter und Implantat mittels des Schnappverschlusses genutzt werden.

In einer anderen bevorzugten Ausführungsform des erfindungsgemäße zweiteilige Adapter umfasst der Schnappverschluss am apikalen Teil des Adapters, der den ersten Teil des erfindungsgemäßen zweiteiligen Adapters darstellt, eine nach innen gerichtete Vertiefung, wobei die Vertiefung bei Anordnung des apikalen Teils des Adapter in der koronalen Ausnehmung des Dentalimplantats in einen Unterschnitt an der Innenseite der Ausnehmung des Dentalimplantats einrastet. Der Unterschnitt bzw. die Verbreiterung an der Innenseite der Ausnehmung des Dentalimplantats ragt nach innen in die zentrale Ausnehmung des Dentalimplantats. Der Schnappverschluss ist bevorzugt so ausgebildet, dass er eine Vertiefung aufweist, die nach innen, also senkrecht zur Axialrichtung des Adapters zur Mittelachse hin gerichtet ist. Wenn der Adapter in dieser bevorzugten Ausführungsform mit seinem apikalen Teil in die koronale Ausnehmung des Dentalimplantats eingeführt wird, kommt der Schnappverschluss mit dem Unterschnitt an der Innenwand des Dentalimplantats in Kontakt, der die koronale Ausnehmung verengt. Bei Fortführung der Einführbewegung des Adapters in die Ausnehmung des Implantats wird der Schnappverschluss daher nach innen gebogen, solange, bis die Vertiefung des Schnappverschlusses in den Bereich des Unterschnitts an der Innenwand des Implantats gelangt. In diesem Moment verschiebt sich der Schnappverschluss zurück in seine Ausgangsposition und der Unterschnitt an der Innenseite der Ausnehmung des Dentalimplantats ist in die Vertiefung eingerastet und hierdurch mit dem Implantat verbunden.

Ein überraschender Vorteil dieser bevorzugten Ausführungsform des Adapters, der den ersten Teil des erfindungsgemäßen zweiteiligen Adapters darstellt, ist, dass er mit praktisch allen existierenden Dentalimplantaten kompatibel ist, die eine koronale Ausnehmung aufweisen, an deren Innenseite ein Innengewinde vorhanden ist, das eigentlich für die Befestigung von prothetischen Komponenten vorgesehen ist. Dabei kann die Verengung der koronalen Ausnehmung, die den für das Einrasten der nach innen gerichtete Vertiefung des Schnappverschlusses notwendigen Unterschnitt bildet, durch das Innengewindes an der Innenseite der Ausnehmung des Dentalimplantats gebildet werden. Alternativ kann auch jeder andere Unterschnitt, der sich an der Innenwand der zentralen Ausnehmung des Dentalimplantats befindet, für die Herstellung der Wirkverbindung zwischen Adapter und Implantat mittels des Schnappverschlusses genutzt werden.

In einer bevorzugten Ausführungsform des erfindungsgemäßen zweiteiligen Adapters umfasst der Adapter, der den ersten Teil des erfindungsgemäßen zweiteiligen Adapters darstellt, apikale Drehsicherungsmittel. Entsprechend komplementäre Drehsicherungsmittel sind an einem koronalen Ende des mit dem Adapter verbundenen oder zu verbindenden Dentalimplantats ausgebildet. Die Drehsicherungsmittel verhindern, dass es im verbundenen Zustand zu Rotationsbewegungen zwischen dem Adapter und dem Implantat kommen kann. Dies ist insbesondere beim Einbringen des Implantats von großer Bedeutung, da hierbei Torsionskräfte auf den Adapter und das Implantat wirken, die von einem am koronalen Ende des Adapters ansetzenden Einbringwerkzeug (beispielsweise einer implantologischen Ratsche) ausgeübt werden.

Es ist überraschend, dass eine Schnappverbindung zwischen Adapter und Implantat gegen Rotationsbewegungen um die Längsachse gesichert werden kann. Dies bietet gegenüber einem in das Innengewinde des Implantats eingeschraubten Adapter den Vorteil, dass die Verbindung zwischen Adapter und Implantat gegen Rotationsbewegungen in beide Drehrichtungen um die Längsachse gesichert ist. Somit wird eine starre Verbindung zwischen Adapter und Implantat beim Einwirken von Torsionskräften in beide Drehrichtungen sichergestellt.

In einer weiteren bevorzugten Ausführungsform des erfindungsgemäßen zweiteiligen Adapters umfasst ein koronales Ende des Adapters, der den ersten Teil des erfindungsgemäßen zweiteiligen Adapters darstellt, eine Kopfstruktur. Die Kopfstruktur stellt eine Struktur dar, die sich in ihrer Form vom apikalen Teil des Adapters absetzt. Sie dient der Aufnahme eines geeigneten Einbringinstruments, das zu der Kopfstruktur komplementäre Strukturen aufweist, wodurch eine starre Wirkverbindung zwischen dem Adapter und dem Einbringinstrument hergestellt werden kann. Die Kopfstruktur kann in verschiedener Art und Weise ausgestaltet sein und kann an die funktionellen Erfordernisse des zu verwendenden Einbringinstrumentes angepasst werden.

Ein großer Vorteil dieser Ausführungsform der Erfindung ist, dass der erfindungsgemäße erste Teil des zweiteiligen Adapters mit einer Kopfstruktur ausgestattet werden kann, die für den Verankerungsmechanismus des jeweils verbundenen Implantats besonders vorteilhaft ist. Somit kann der erfindungsgemäße Adapter für das Einbringen verschiedener Implantat-Typen genutzt werden, die unterschiedliche Einbringmechanismen haben, wie z.B. Schraubenimplantate, Zylinderimplantate ohne Gewinde oder Stufenzylinderimplantate.

Überraschenderweise ermöglicht die Kopfstruktur zudem die sterile Entnahme des mit dem Adapter verbundenen Implantats aus der Verpackung. Dies kann beispielsweise per Hand geschehen, wenn die Kopfstruktur so ausgebildet ist, dass sie mit den Fingern gegriffen und im Anschluss mit einem Einbringwerkzeug verbunden werden kann, ohne dass das Implantat berührt wird. In einem anderen Beispiel kann die Entnahme des mit dem Implantat verbundenen Adapters direkt mit Hilfe des Einbringwerkzeugs erfolgen, indem die Verbindung zwischen der Kopfstruktur und dem Einbringinstrument bereits vor der Entnahme des mit dem Adapter verbundenen Implantats hergestellt wird. Die Verbindung zwischen dem Einbringinstrument und der Kopfstruktur wird bevorzugt in Form einer Steckverbindung hergestellt.

In einer bevorzugten Ausführungsform des erfindungsgemäßen zweiteiligen Adapters weist die Kopfstruktur eine Positionsmarkierung der Drehsicherungsmittel auf. Die Positionsmarkierung zeigt die Orientierung der Drehsicherungsmittel des Adapters an, wodurch auf die Orientierung der Drehsicherungsmittel des Implantats geschlossen werden kann, da diese komplementär zu den Drehsicherungsmitteln des Adapters ausrichtet sind. Als Positionsmarkierung kann ein definiertes Strukturelement in der Kopfstruktur dienen, dessen Position im Verhältnis zu den Drehsicherungsmitteln bekannt ist. Auch ist es möglich, dass die Kopfstruktur als Ganzes als Positionsmarkierung der Drehsicherungsmittel fungiert, wenn sie Elemente aufweist, deren Position im Verhältnis zu den apikalen Drehsicherungsmitteln bekannt ist. Auch oberflächliche Markierungen, die keine strukturellen Merkmale der Kopfstruktur darstellen, wie beispielsweise spezifisch angebrachte Aufkleber oder Farbmarkierungen, können als Positionsmarkierungen der Drehsicherungsmittel fungieren.

Ein überraschender Vorteil dieser Ausführungsform der vorliegenden Erfindung ist, dass mit Hilfe der Positionsmarkierungen während des Einbringens des Implantats in den Knochen und vor Trennung des Adapters vom Implantat die Orientierung der Drehsicherungsmittel des Implantats bestimmt werden kann. Dies geschieht durch Überprüfung der Orientierung der Positionsmarkierung der Drehsicherungsmittel an der Kopfstruktur, beispielsweise mittels eines Intraoralscanners. Die Information über die Orientierung der Drehsicherungsmittel des Implantats ist wichtig für den nachfolgenden Aufbau der koronalen prothetischen Komponenten auf dem Implantat, da auch diese über Drehsicherungsmittel verfügen, die komplementär zu denen des Implantats sind. Entsprechend beeinflusst die Orientierung und Positionierung der Drehsicherungsmittel des Implantats die spätere Position der prothetischen Komponenten.

Bei einer nicht optimalen Positionierung der Drehsicherungsmittel des Implantats kann eine Veränderung der Position durch erneutes Ansetzen des Einbringinstruments am Adapter korrigiert werden, ohne dass die Verbindung zwischen Adapter und Implantat getrennt werden muss. Dies verringert die Anzahl der notwendigen Arbeitsschritte, um das Implantat in die vorgesehene Position zu bringen, wodurch die Gefahr von Verunreinigungen des Implantats während des Einbringprozesses verringert wird. Zudem werden die mechanischen Belastungen für Implantat und Knochen gering gehalten. Ein weiterer entscheidender Vorteil ist die überraschend große Zeitersparnis, die durch die Verringerung der Arbeitsschritte erzielt wird.

In einer weiteren bevorzugten Ausführungsform des erfindungsgemäßen zweiteiligen Adapters handelt es sich bei der Positionsmarkierung an der Kopfstruktur um eine Kerbe. Die Kerbe kann beispielsweise senkrecht zur Axialrichtung der Schraube über die koronale Fläche der Kopfstruktur verlaufen. Da die Orientierung der Kerbe im Verhältnis zu den Drehsicherungsmitteln des Adapters bekannt ist, kann aus der Information über die Orientierung der Kerbe auf die Position der Drehsicherungsmittel des Adapters und des Implantats geschlossen werden. Es ist vorteilhaft, dass es durch eine so einfache Markierung möglich ist, auf die Position der Drehsicherungsmittel des Implantats zu schließen, was zu einem sichereren und effizienteren Einbringprozess des Implantats in den Knochen beiträgt.

Überraschenderweise kann die Kerbe neben ihrer Funktion als Positionsmarkierung für die Drehsicherungsmittel des Adapters auch als Ansatzpunkt für ein Einbringinstrument dienen, das einen Fortsatz hat, der komplementär in die Kerbe greift, wodurch die Übertragung einer Torsionskraft vom Einbringinstrument auf Adapter und Implantat ermöglicht wird.

In einer weiteren bevorzugten Ausführungsform des erfindungsgemäßen zweiteiligen Adapters hat die Kopfstruktur im Vergleich zum apikalen Teil des Adapters einen vergrößerten Durchmesser und am apikalen Ende der Kopfstruktur befindet sich eine Fläche, die gegenüber der Axialrichtung des Adapters abgewinkelt ist. Der gegenüber dem apikalen Teil vergrößerte Durchmesser der Kopfstruktur ermöglicht eine einfachere Handhabung des Adapters, beispielsweise wenn er manuell an der Kopfstruktur angefasst wird.

Ein überraschender Vorteil des vergrößerten Durchmessers der Kopfstruktur ist, dass hierdurch der Schwerpunkt der Verbindung aus Implantat und Adapter nach koronal verschoben wird, wodurch die Handhabung des Implantats nach Herstellung der Verbindung zwischen Einbringinstrument und Adapter erleichtert wird und damit auch der Vorgang des Einbringens des Implantats in den Knochen.

In einer weiteren bevorzugten Ausführungsform des erfindungsgemäßen zweiteiligen Adapters umfasst die Kopfstruktur eine parallel zur Fläche am apikalen Ende der Kopfstruktur des Adapters zirkulär um die Kopfstruktur verlaufende Vertiefung. Hierbei handelt es sich um eine Kerbe, die über die Seitenfläche der Kopfstruktur des Adapters verläuft, wobei die Ebene des Kerben-Verlaufs senkrecht zur Axialrichtung des Adapters ausgerichtet ist. Die um die Kopfstruktur verlaufende Vertiefung oder Kerbe kann zur Herstellung einer Steckverbindung zwischen der Kopfstruktur und einem geeigneten Einbringinstrument genutzt werden kann. Zudem kann die Kerbe dazu dienen, den Adapter, wenn dieser zusammen mit dem einzubringenden Dentalimplantat im verbundenen Zustand in der Verpackung vorliegt, in der Verpackung zu fixieren, indem eine klammer- oder manschettenartige Struktur, die Teil der Verpackung ist, von der Innenseite der Verpackung in die Kerbe greift. Somit kann der erfindungsgemäße zweiteilige Adapter zusammen mit dem verbundenen Dentalimplantat innerhalb der Verpackung fixiert werden, so dass die Implantatoberfläche nicht mit der Verpackung in Berührung kommt. Hierdurch ist sichergestellt, dass es nicht durch Verunreinigungen der Verpackung zu Kontaminationen des einzubringenden Dentalimplantats kommt, wodurch das Risiko von Infektionen minimiert werden kann.

In einer weiteren bevorzugten Ausführungsform des erfindungsgemäßen zweiteiligen Adapters sind die Außendurchmesser des Konter-Rings, der Kopfstruktur und des Dentalimplantats in etwa gleich groß. Hierdurch ist gewährleistet, dass der Konter-Ring im zusammengesetzten Zustand von zweiteiligem Adapter und Implantat zwischen der Kopfstruktur des ersten Teils des Adapters und dem Implantat angeordnet ist und aus dieser Position nur durch Trennung der Wirkverbindung zwischen dem Implantat und dem ersten Teil des Adapters herausbewegt werden kann. Der Konter-Ring ist also zwischen dem koronalen Ende des Implantats und dem apikalen Ende der Kopfstruktur des ersten Teils des Adapters eingeschlossen. Wird der Konter-Ring nach Einbringen des Implantats mit Hilfe des erfindungsgemäßen zweiteiligen Adapters in den Knochen nach apikal geschoben, so kommt er in Kontakt mit dem koronalen Ende des Implantats, also der Implantatschulter, und kann nicht weiter nach apikal geschoben werden. Weiterhin wird hierdurch verhindert, dass der Konter-Ring im zusammengesetzten Zustand von erfindungsgemäßem zweiteiligem Adapter und Implantat über die Kopfstruktur am koronalen Ende des ersten Teils des Adapters nach koronal bewegt wird und aus der Anordnung entfernt wird. Die Formulierung "in etwa gleich groß" ist in diesem Zusammenhang so zu verstehen, dass leichte Abweichungen der Außendurchmesser von Implantat, Konter-Ring und Kopfstruktur des Adapters möglich sind, wobei der Außendurchmesser des Implantats immer mindestens genauso groß oder größer ist als die Außendurchmesser des Konter-Rings und der Kopfstruktur. Hierdurch ist sichergestellt, dass das Implantat auch tiefer als Knochenniveau in den Knochen eingebracht werden kann. Zudem wird eine Kollision mit benachbarten Zähnen vermieden. Im Rahmen der vorliegenden Erfindungen sind leichte Abweichungen bzw. Verringerungen des Außendurchmessers der Kopfstruktur oder des Konter-Rings gegenüber dem Außendurchmesser des Implantats tolerierbar im Bereich von 2 mm, bevorzugt 1 mm, besonders bevorzug 0,5 mm, ganz besonders bevorzug 0,1 mm, solange die hier dargestellten Merkmale der bevorzugten Ausführungsform der Erfindung realisiert werden.

Dadurch, dass der Konter-Ring in etwa den gleichen Außendurchmesser wie das Implantat und die Kopfstruktur des Adapters hat, ist es möglich, dass im zusammengesetzten Zustand von Adapter, Konter-Ring und Implantat, zusätzlich zum ggf. aufgebrachten Drehmoment, eine nach apikal auf den Ring ausgeübte Kraft auf das koronale Ende des Implantats übertragen wird, wodurch dieses in seine endgültige Position im Knochen gebracht wird.

In einer weiteren bevorzugten Ausführungsform des zweiteiligen Adapters weist die Außenseite des Konter-Rings Fixierungsstrukturen auf. Die Fixierungsstrukturen ermöglichen es dem Anwender, die Position des Konter-Rings zu kontrollieren und diesen in eine gewünschte Position zu bringen und dort zu fixieren. Die Fixierungsstrukturen bilden Angriffspunkte für beispielsweise ein Instrument oder die manuelle Handhabung durch den Anwender, ohne hierauf limitiert zu sein. Dem Fachmann sind geeignete Fixierungsstrukturen bekannt und mögliche Formen der Ausgestaltung der Fixierungsstrukturen ergeben sich für den Fachmann aus der detaillierten Beschreibung. Dies gilt ebenfalls für geeignete Instrumente, die an den Fixierungsstrukturen angreifen.

Nach Einbringen des Implantats in den Knochen mit Hilfe des verbundenen zweiteiligen Adapters kann der Konter-Ring durch Ansetzten einer nach apikal gerichteten Kraft an den Fixierungsstrukturen auf das koronale Ende des Implantats gedrückt und dort fixiert werden. Beim Herausziehen des ersten Teils des zweiteiligen erfindungsgemäßen Adapters aus der Anordnung mit dem Implantat und dem Konter-Ring wirkt eine nach koronal gerichtete Kraft auf das Implantat. Durch das Fixieren des Konter-Rings auf dem koronalen Ende des Implantats mit Hilfe der Fixierungsstrukturen wird jedoch verhindert, dass die Position des Implantats beim Lösen der Wirkverbindung zwischen dem ersten Teil des Adapters und dem Implantat verändert wird und die nach koronal gerichtete Kraft vom Implantat auf den Knochen weitergegeben wird.

Die Fixierungsstrukturen erleichtern die Kontrolle der Position des Konter-Rings und verleihen dem Anwender bei der Trennung von Implantat und erfindungsgemäßem zweiteiligem Adapter mehr Sicherheit. Der Anwender kann somit den Verbleib des Implantats in der vorgesehenen Position im Knochen während des Trennvorgangs sicherstellen ohne zuvor die Stabilität der Verankerung prüfen zu müssen, wodurch eine schnelle Trennung von Adapter und Implantat nach Einbringen des Implantats in den Knochen ermöglicht wird. Dies ist insbesondere dann von Vorteil, wenn sich bereits beim Einbringen des Implantates zeigt, dass die Verankerung im Knochen schwach ist. Weiterhin ermöglichen die Fixierungsstrukturen die sterile Handhabung des Konter-Rings während der Trennung von Adapter und Implantat nach dem Einbringen in den Knochen, da ein steriles Instrument zur Fixierung des Konter-Rings verwendet werden kann und die Fixierung nicht manuell erfolgen muss. Entsprechend helfen die Fixierungsstrukturen, das Risiko einer mikrobiellen Besiedlung des Implantats zu minimieren.

Durch die Fixierungsstrukturen hat der Anwender eine sehr hohe Flexibilität für das Ansetzen eines geeigneten Instruments zum Fixieren des Konter-Rings, da dieses aus praktisch jedem beliebigen Winkel über die Fixierungsstrukturen am Konter-Ring angreifen kann. Dies stellt einen erheblichen Vorteil gegenüber der üblichen Fixierung eines Implantats beim Lösen des Adapters dar. Üblicherweise wird hierbei ein geeignetes Instrument direkt auf der Implantat-Schulter angesetzt, um das Implantat beim Entfernen des Adapters zu fixieren. Die Bewegungsfreiheit ist hierbei aber eingeschränkt, da das Instrument von oben (koronal) auf die Implantat-Schulter gedrückt werden muss. Hierbei kann es zu Beschädigungen des Implantats kommen, wodurch die Stabilität des Implantats beeinträchtigt wird. Zudem begünstigen solche Beschädigungen die Besiedlung von Mikroorganismen. Weiterhin kann es leicht zu Verletzungen des angrenzenden Gewebes kommen. Diese Nachteile werden durch den Konter-Ring und insbesondere durch die Fixierungsstrukturen am Konter-Ring vermieden.

In einer weiteren bevorzugten Ausführungsform des erfindungsgemäßen zweiteiligen Adapters handelt es sich bei den Fixierungsstrukturen an der Außenseite des Konter-Rings um mindestens zwei Aussparungen. Diese Aussparungen können als Vertiefungen an der Außenseite des Rings oder auch als Löcher in der Außenseite des Rings ausgebildet sein und dienen der Aufnahme eines Instruments, dessen Fortsätze in diese Aussparungen hineingreifen und die Übertragung von Kräften zur Fixierung des Konter-Rings ermöglichen. Dem Fachmann sind Ausführungsbeispiele für entsprechende Instrumente bekannt, wie beispielsweise speziell im Bereich der Implantologie eingesetzte Pinzetten oder Sonden.

In einer weiteren bevorzugten Ausführungsform des erfindungsgemäßen zweiteiligen Adapters handelt es sich bei den Fixierungsstrukturen an der Außenseite des Konter-Rings um 4 Aussparungen in der Außenwand des Rings, in einer besonders bevorzugten Ausführungsform um 6 Aussparungen in der Außenwand des Rings. Durch eine höhere Anzahl an Fixierungsstrukturen kann der Anwender das Instrument, dessen Fortsätze beispielsweise in zwei einander gegenüberliegende Aussparungen greifen, flexibler ansetzen, da nicht nur ein Paar sondern 2 oder 3 Paare von Aussparungen als Fixierungsstrukturen zur Verfügung stehen. Hierdurch wird das Fixieren des Implantats erleichtert, da der Anwender die für ihn angenehmste Positionierung des Instruments an den Fixierungsstrukturen aus mehreren Möglichkeiten auswählen kann.

In einer weiteren bevorzugten Ausführungsform des zweiteiligen Adapters weisen der Adapter und der Konter-Ring jeweils komplementäre Drehsicherungsmittel auf. Komplementäre Strukturen sind insbesondere solche, die zwar gegensätzlich sind, aber sich im zusammengesetzten Zustand ergänzen und ineinander fügen. Hierdurch wird eine unabhängige Rotationsbewegung des Konter-Rings im zusammengesetzten Zustand von erfindungsgemäßem zweiteiligem Adapter und Implantat um die Längsachse der Anordnung verhindert. Dies gewährleistet eine verbesserte Handhabung der Anordnung und erleichtert dem Anwender die Kontrolle der Position des Konter-Rings. Zudem ist durch diese zusätzlichen Drehsicherungsmittel sichergestellt, dass im zusammengesetzten Zustand von zweiteiligem Adapter und Implantat keine unabhängige Rotationsbewegung eines der drei Bauteile möglich ist, wodurch beim Einbringen des Implantats in den Knochen ein Höchstmaß an Stabilität gewährleistet ist.

Eine weitere bevorzugte Ausführungsform der Erfindung betrifft einen erfindungsgemäßen zweiteiligen Adapter, dadurch gekennzeichnet, dass es sich bei den Drehsicherungsmitteln des Konter-Rings um mindestens zwei Vorsprünge an der koronalen Fläche des Konter-Rings handelt, die aus der koronalen Fläche des Konter-Rings herausragen, und bei den Drehsicherungsmitteln des Adapters um mindestens zwei Aussparungen an der apikalen Fläche der Kopfstruktur handelt, die zu den Vorsprüngen an der koronalen Fläche des Konter-Rings komplementär sind. Komplementär bedeutet, dass die Aussparungen an der apikalen Fläche der Kopfstruktur den Vorsprüngen der koronalen Fläche des Konter-Rings im zusammengesetzten Zustand von Konter-Ring und Adapter gegenüberliegen, was eine Aufnahme der Vorsprünge durch die Aussparungen ermöglicht.

Diese Art der Drehsicherungsmittel ist vorteilhaft für die vorliegende Ausführungsform des zweiteiligen Adapters, da sie keine Vorsprünge aus der apikalen Fläche der Kopfstruktur aufweist. Solche Vorsprünge würden die Herstellung einer Verbindung zwischen dem ersten Teil des zweiteiligen erfindungsgemäßen Adapters und einem Implantat ohne Verwendung eines Konter-Rings ggf. behindern.

Ein überraschender Vorteil dieser Ausführungsform der Drehsicherungsmittel ist, dass die Aussparungen an der apikalen Fläche der Kopfstruktur als Angriffspunkt für ein Hakeninstrument dienen können, das zum Herausziehen des Adapters aus dem Implantat bei der Trennung der Verbindung zwischen Adapter und Implantat genutzt werden kann.

Eine weitere bevorzugte Ausführungsform des erfindungsgemäßen zweiteiligen Adapters ist dadurch gekennzeichnet, dass der Adapter und der Konter-Ring irreversibel miteinander verbunden sind, wobei der Konter-Ring entlang der Axialrichtung des Adapters beweglich ist. Diese Ausführungsform hat den Vorteil, dass bei der Trennung des erfindungsgemäßen Adapters vom Dentalimplantat der Konter-Ring nicht vom Adapter getrennt wird, sondern diese miteinander verbunden bleiben. Somit wird verhindert, dass der Konter-Ring als Einzelteil aus dem Mundraum entfernt werden muss. Der Konter-Ring stellt ein kleines Bauteil dar, das, falls es fallengelassen wird bevor es aus dem Mundraum gelangt ist, vom Patienten in die Lunge aspiriert werden kann, was zu erheblichen gesundheitlichen Beeinträchtigungen führen kann. Es war überraschend, dass der Konter-Ring trotz der Verbindung zum Adapter dafür genutzt werden kann, das Implantat während des Trennvorgangs vom Adapter im Knochen zu fixieren. Dies wird dadurch sichergestellt, dass die Verbindung zwischen Adapter und Konter-Ring nicht starr ist, sondern dass der Konter-Ring entlang der Längsachse des Adapters bewegt werden kann. Nach koronal ist die Bewegungsfreiheit des Konter-Rings durch die Kopfstruktur und insbesondere durch die Fläche am apikalen Ende der Kopfstruktur des Adapters begrenzt. Zudem ist die Bewegungsfreiheit des Konter-Rings nach apikal durch geeignete Strukturen, die sowohl am Konter-Ring als auch am apikalen Teil des Adapters vorhanden sein können, begrenzt.

Hierbei kann es sich beispielsweise um eine Verbreiterung des apikalen Teils des Adapters handeln, die einen Durchmesser hat, der größer ist als der Innendurchmesser des Konter-Rings, so dass dieser nicht über diese Verbreiterung hinweg bewegt werden kann. Dem Fachmann sind weitere entsprechende Strukturen bekannt bzw. ist der Fachmann anhand der vorliegenden Beschreibung in der Lage, entsprechende Strukturen zu gestalten. Hierbei ist zu beachten, dass der Bewegungsspielraum des Konter-Rings entlang der Längsachse des Adapters groß genug sein muss, um die Steckverbindung zwischen dem Adapter und dem Dentalimplantat durch Herausziehen des Adapters aus der koronalen Ausnehmung des Dentalimplantats zu lösen, wobei der Konter-Ring auf der Implantat-Schulter fixiert bleibt. Hierfür ist erfindungsgemäß ein Bewegungsspielraum von 10 mm, bevorzugt 5 mm, besonders bevorzugt 2,5 mm, ganz besonders bevorzugt 1 mm notwendig.

In einer weiteren bevorzugten Ausführungsform des erfindungsgemäßen zweiteiligen Adapters ist an der Innenfläche des Konter-Rings mindestens ein Schnappverschluss ausgebildet, der bei Anordnung des apikalen Teils des Adapter in der zentralen Ausnehmung des Konter-Rings in mindestens eine komplementäre Struktur am apikalen Teil des Adapters einrastet und eine irreversible Steckverbindung zwischen Adapter und Konter-Ring herstellt, wobei der Konter-Ring entlang der Axialrichtung des Adapters beweglich ist. Der Schnappverschluss an der Innenseite bzw. Innenfläche des Konter-Rings kann hierbei als Vorsprung, der in die zentrale Ausnehmung des Rings hineinragt, ausgebildet sein. Die komplementäre Struktur am apikalen Teil des Adapters kann von einer Vertiefung gebildet werden, die sich vom apikalen Ende der Kopfstruktur des Adapters nach apikal ausdehnt und so ausgestaltet ist, dass sie den Vorsprung bzw. Schnappverschluss an der Innenfläche des Konter-Rings aufnehmen kann. An ihrem apikalen Ende wird die Vertiefung am apikalen Teil des Adapters durch eine nach koronal gerichtete Fläche begrenzt, die einem Vorspruch entspricht, der auch als Plateau bezeichnet werden kann. Dieser Vorsprung bildet eine Verbreiterung des apikalen Teils des Adapters, wodurch der Durchmesser des apikalen Teils des Adapters in diesem Bereich größer ist als der Innendurchmesser des Konter-Rings im Bereich des Schnappverschlusses. Entsprechend kann der Schnappverschluss und somit der Konter-Ring nicht über diesen Vorsprung hinaus nach apikal geschoben werden.

Der Schnappverschluss an der Innenseite des Konter-Rings ist so ausgestaltet, dass der Konter-Ring von apikal nach koronal über den Vorsprung bzw. die Verbreiterung am apikalen Teil des Adapters hinweg geschoben werden kann und dann in eine komplementäre Struktur, beispielsweise in eine Vertiefung, am apikalen Teil des Adapters einrastet. Der Schnappverschluss kann beispielsweise als flossenartiger Vorsprung ausgestaltet sein, der vom koronalen Ende der Innenfläche des Konter-Rings nach schräg apikal in die zentrale Ausnehmung des Konter-Rings hineinragt. Eine entsprechend gestaltete Flosse lässt sich nach außen verbiegen, wenn sie in koronale Richtung an der Verbreiterung des apikalen Teils des Adapters vorbeigeschoben wird, und bewegt sich zurück in ihre Ausgangsposition, wenn sie in die komplementäre Struktur, beispielsweise eine zur Flosse komplementäre Vertiefung, einrastet. Eine entsprechende Flosse lässt sich aus der eingerasteten Position nicht nach apikal über den Vorsprung bzw. die Verbreiterung am apikalen Teil des Adapters hinwegschieben, weshalb die Steckverbindung zwischen Konter-Ring und Adapter irreversibel ist. Der Schnappverschluss und die komplementären Strukturen am apikalen Teil des Adapters können zudem als Drehsicherungsmittel fungieren, die eine Rotationsbewegung des Konter-Rings um die Längsachse des Adapters im verbundenen Zustand verhindern.

Beim Trennen des Adapters vom Implantat verhindert die irreversible Schnappverbindung zwischen Adapter und Konter-Ring ein Trennen des Konter-Rings vom Adapter, so dass keine Gefahr besteht, dass der Konter-Ring abrutscht und vom Patienten aspiriert wird. Der Abstand zwischen dem apikalen Ende der Flosse des Konter-Rings und dem Plateau am apikalen Teil des Adapters bestimmt den Bewegungsspielraum des Konter-Rings entlang der Längsachse des Adapters im verbundenen Zustand. Dieser Abstand bzw. der Bewegungsspielraum ist größer als der Weg, der beim Abziehen des Adapters vom Implantat in koronale Richtung benötigt wird, um die Schnappverbindung zwischen Adapter und Implantat zu trennen. Hierdurch wird gewährleistet, dass der Konter-Ring während des Abziehens des Adapters vom Implantat so lange auf der Implantat-Schulter fixiert werden kann, bis die Schnappverbindung zwischen Implantat und Adapter gelöst ist. Dies ist insbesondere in den Fällen relevant, wenn das Implantat keine suffiziente Primärstabilität im Knochen aufweist.

Eine bevorzugte Ausführungsform des erfindungsgemäßen zweiteiligen Adapters umfasst einen ersten Teil in Form eines Adapters zum Einbringen eines Dentalimplantats in den Knochen. Am apikalen Ende des Adapters befindet sich mindestens ein Schnappverschluss. Der Schnappverschluss stellt nach Hineinstecken des apikalen Teils des Adapters in die koronale Ausnehmung des Dentalimplantats eine reversible Schnappverbindung zwischen Adapter und Dentalimplantat her, indem er in einen Unterschnitt an der Innenseite der koronalen Ausnehmung des Dentalimplantats einrastet. Eine Trennung der Schnappverbindung nach Einbringen des Dentalimplantats in den Knochen erfolgt durch Herausziehen des Adapters aus dem Implantat, wobei eine nach koronal gerichtete Kraft auf den Adapter wirkt.

Die Schnappverbindung zwischen Adapter und Implantat ermöglicht eine besonders zeiteffiziente Trennung von Adapter und Implantat nach Einbringen des Implantats in den Knochen im Vergleich zu herkömmlichen Schraubenverbindungen. Hierdurch können Verunreinigungen des Implantats vermieden werden, die bei einem längeren Trennungsvorgang wahrscheinlicher auftreten.

An dem Adapter und dem Implantat sind jeweils komplementäre Drehsicherungsmittel vorhanden, die eine unabhängige Rotationsbewegung von Implantat oder Adapter um die Längsachse im zusammengesetzten Zustand verhindern. Der Adapter hat eine schraubenkopfähnliche Kopfstruktur, an der Einbringinstrumente, die für das Einsetzen des Implantats in den Knochen genutzt werden, ansetzen können.

Der zweite Teil des erfindungsgemäßen Adapters umfasst einen Konter-Ring. Der apikale Teil des Adapters, der den ersten Teil des erfindungsgemäßen zweiteiligen Adapters darstellt, wird in der zentralen Ausnehmung des Konter-Rings angeordnet und durch hineinstecken in die koronale Ausnehmung des Dentalimplantats mit dem Implantat verbunden. Da die Kopfstruktur des Adapters, der Konter-Ring und das Dentalimplantat in etwa den gleichen Außendurchmesser haben, ist der Konter-Ring somit zwischen der Kopfstruktur des Adapters und dem koronalen Ende des Implantats eingeschlossen. Beim Trennen der Schnappverbindung nach Einbringen des Dentalimplantats in den Knochen kann der Konter-Ring auf dem koronalen Ende des Dentalimplantats fixiert werden, wodurch verhindert wird, dass sich die Position des Dentalimplantats durch das Herausziehen des Adapters verändert. Zur Fixierung des Konter-Rings sind an dessen Außenseite spezielle Fixierungsstrukturen ausgebildet, die als Ansatzpunkte für geeignete Instrumente zur Fixierung des Konter-Rings dienen.

### Detaillierte Beschreibung der Erfindung

"Adapter" im Sinne der vorliegenden Erfindung sind insbesondere Bauteile, die der Herstellung einer Verbindung zwischen zwei anderen Bauteilen dienen. Adapter werden beispielsweise auch, ohne darauf limitiert zu sein, als Verbindungsteile, Anpassungseinrichtung, Anpassungsvorrichtung, Anpassungsteil, Anschlussstück, Anschlussteil, Zwischenstecker oder Zwischenstück bezeichnet. Der Begriff "Adapter" umfasst, ohne Limitierung, die Begriffe Anschlussadapter, Befestigungsadapter, Geräteadapter und Universaladapter. In einer bevorzugten Ausführungsform der vorliegenden Erfindung bezeichnet ein "Adapter" ein Verbindungsstück zwischen einem Dentalimplantat und einem Instrument oder Werkzeug, beispielsweise einem Werkzeug zum Einbringen eines Dentalimplantats in den Knochen.

Der Begriff "Einbringen" bezeichnet im Rahmen der vorliegenden Erfindung den Vorgang des Einsetzens eines Dentalimplantats in den Knochen und kann unter anderem auch verstanden werden im Sinne von Einsetzen, Einbauen, Einschrauben, Anbringen, Implantieren, Einfräsen, Eindrücken, Einpflanzen, Integrieren, Installieren oder Einhämmern. Dem Fachmann ist bewusst, dass der Begriff jeden Vorgang umfasst, der zur Verankerung eines Dentalimplantats im Knochen führt.

Unter einer "Anordnung" im Sinne der vorliegenden Erfindung ist insbesondere eine Formation, Organisation oder eine Aufstellung verschiedener Einzelgegenstände zueinander zu verstehen.

Der Begriff "Dentalimplantat" wird im Rahmen der vorliegenden Erfindung synonym mit dem Begriff "Implantat" verwendet und umfasst ohne Limitierung alle Formen von Zahnimplantaten unabhängig von Form, Material oder Einbringmechanismus, insbesondere Titanimplantate, Kunststoffimplantate, Keramikimplantate, zusammengesetzte Zahnimplantate, einteilige Implantate, zweiteilige Implantate, mehrteilige Implantate, Hohlzylinderimplantate, Blattimplantate, Diskimplantate, Schraubenimplantate und Stufenimplantate.

Der Begriff "Knochen" umfasst im Rahmen der vorliegenden Erfindung insbesondere alle Arten von Knochenformen, einschließlich Alveolarknochen, Kieferknochen, Röhrenknochen, platte Knochen, kurze Knochen, Sesambeine, luftgefüllte Knochen. Weiterhin sind alle Knochenbestandteile, wie beispielsweise die Substantia spongiosa, die Substantia compacta, die Knochenhaut, das Periost, das Endost und die mit Knorpel überzogenen Gelenkflächen von Knochen hiervon umfasst.

Unter einer "Innenseite" im Sinne der vorliegenden Erfindung ist insbesondere die Fläche eines Gegenstandes zu verstehen, die zu dessen zentral liegenden Bereich hin ausgerichtet ist. Bei länglichen Gegenständen sind dies beispielsweise die Flächen oder Seiten, die auf die Mittelachse des Gegenstandes ausgerichtet sind. Im Fall des hier beschriebenen Konter-Rings bezieht sich die Innenseite auf die Fläche, die auf die Mittelachse der Gesamtanordnung des erfindungsgemäßen zweiteiligen Adapters ausgerichtet ist. Die Richtungsbezeichnung "nach innen" bezeichnet im Zusammenhang mit der vorliegenden Erfindung die Richtung innerhalb der beschriebenen Bauteile, die auf die Mittelachse der Gesamtanordnung des erfindungsgemäßen zweiteiligen Adapters ausgerichtet ist. "Nach außen" bezeichnet entsprechend die entgegengesetzte Richtung, die von der Mittelachse des Adapters weg weist.

Unter "Wirkverbindung" ist insbesondere jede Art von Verbindung zwischen zwei Gegenständen zu verstehen, die einen Austausch von Kräften zwischen diesen Gegenständen ermöglichen. Der Begriff kann genutzt werden im Sinne von Schnappverbindung, Steckverbindung, Verknüpfung, Koppelung, Verflechtung, Verkettung, Verschmelzung, Verzahnung, Magnetverbindung oder Zusammenfügen, ohne hierauf limitiert zu sein.

Eine "starre" Wirkverbindung zwischen zwei Bauteilen im Sinne der vorliegenden Erfindung bezeichnet insbesondere solche Verbindungen, bei denen unabhängige Bewegungen der verbundenen Bauteile weitestgehend unterbunden werden.

Im Rahmen der vorliegenden Erfindung bedeutet der Begriff "längliche Form", dass der betreffende Gegenstand eine größere Länge im Vergleich zu seiner Breite aufweist. "Längliche Formen" im Sinne der vorliegenden Erfindungen sind beispielsweise Schrauben, Stifte, Flaschen, Zylinder, Kegel, Konus, Rohre oder Nägel. Entsprechend bezieht sich der Begriff "Längsrichtung" auf die Richtung der längsten Ausdehnung des entsprechenden länglichen Gegenstandes. In der Zahnheilkunde wird anstatt des Begriffs "Längsrichtung" auch der Begriff "Axialrichtung" verwendet, um die Richtung der Zahnachse oder der Achse einer prothetischen Komponente zu bezeichnen. Im Rahmen der vorliegenden Erfindung werden die Begriffe Längsrichtung und Axialrichtung synonym verwendet.

Der Begriff "apikal" bezeichnet im Rahmen der vorliegenden Erfindung die Orientierung zur Wurzelspitze eines Zahnes bzw. den Teil einer prothetischen Komponente oder eines erfindungsgemäßen Adapters, der nach Einbringen des Implantats in den Kieferknochen in Richtung des Kieferknochens zeigt. Der Begriff "koronal" bezeichnet die entgegengesetzte Orientierung in Richtung der Zahnkrone bzw. den Teil einer prothetischen Komponente oder eines erfindungsgemäßen Adapters, der nach Einbringen des Implantats in den Kieferknochen vom Kieferknochen weg weist.

Unter "Ausnehmung" ist insbesondere eine Vertiefung, eine Aussparung oder ein Loch in einem Gegenstand zu verstehen.

Im Rahmen der vorliegenden Erfindung bezeichnet der Begriff "Schnappverschluss" eine Struktur, die zur Herstellung einer Schnappverbindung bzw. Steckverbindung genutzt werden kann, indem der Schnappverschluss in eine entsprechend komplementäre Struktur an einem anderen Bauteil einrastet. In einer bevorzugten Ausführungsform kann es sich hierbei um einen Fortsatz handeln, der in axialer Richtung vom apikalen Teil des erfindungsgemäßen Adapters ausgeht und eine von der Axialrichtung nach außen gerichtete Verbreiterung an seinem freien Ende aufweist, wobei die Dicke der Verbreiterung kontinuierlich zu- und abnimmt. Unter "außen" ist in diesem Zusammenhang insbesondere die Richtung zu verstehen, die senkrecht zur Axialrichtung bzw. zur Mittelachse des Adapters verläuft und von dieser weg weist. Der Begriff "Verbreiterung" bezieht sich auf die Außenseite des Schnappverschlusses, also die Seite oder Fläche des Schnappverschlusses, die von der Mittelachse des Adapters weg weist. Unter einer Verbreiterung des Schnappverschlusses wird im Rahmen der vorliegenden Erfindung ein Bereich verstanden, an dem die Außenseite des Schnappverschlusses weiter von der Mittelachse des Adapters entfernt ist als am koronalen und/oder am apikalen Ende des Schnappverschlusses. Die Verbreiterungen können auch, ohne darauf limitiert zu sein, als Backen, Vorsprünge, Auswölbungen, Vorwölbungen oder Ausstülpungen bezeichnet werden. Alternativ kann an Stelle der Verbreiterung auch eine Vertiefung ausgebildet sein.

In bevorzugten Ausführungsformen der Erfindung umfasst der erfindungsgemäße Adapter an seinem apikalen Ende mehr als einen Schnappverschluss, bevorzugt 2 Schnappverschlüsse, besonders bevorzugt 3 Schnappverschlüsse. In weiteren Ausführungsformen können auch 4, 5, 6, 7, 8, oder mehr Schnappverschlüsse ausgebildet sein. In Ausführungsformen der Erfindung, die mehr als einen Schnappverschluss umfassen, können die Schnappverschlüsse insbesondere zirkulär symmetrisch um die Längsachse des Adapters angeordnet sein.

Der Schnappverschluss kann von einem biegeelastischen Fortsatz gebildet werden, so dass sich das freie, apikale Ende des Schnappverschlusses nach innen biegen kann, wenn von außen eine Kraft auf den Schnappverschluss einwirkt. Der Fortsatz kann daher insbesondere auch als Feder bezeichnet werden, da er unter Einwirkung einer nach innen gerichteten Kraft nach innen federn kann.

Alternativ kann ein Schnappverschluss auch als Verbreiterung oder Vertiefung im apikalen Bereich des Adapters ausgebildet sein. Auch wenn der Schnappverschluss nicht als flexible, federnde Struktur ausgebildet ist, kann er sich beispielsweise aufgrund der elastischen Eigenverformung des Materials, aus dem der erfindungsgemäße Adapter hergestellt ist, in seiner Form reversibel anpassen, wenn die Verbindung zum Dentalimplantat hergestellt oder gelöst wird.

Der Schnappverschluss wird verformt, beispielsweise durch eine federnde Bewegung, wenn der Schnappverschluss als Feder ausgebildet ist, oder durch elastische Eigenverformung, wenn der erfindungsgemäße Adapter in die Ausnehmung eines Dentalimplantats hineingesteckt wird, wobei an der Innenwand der Ausnehmung ein Unterschnitt vorhanden ist, der den Durchmesser der Ausnehmung so verkleinert, dass der Adapter nur in die Ausnehmung des Dentalimplantats hineingeschoben werden kann, indem der Schnappverschluss nach innen gebogen oder reversibel verformt wird. Sobald der Adapter soweit in die Ausnehmung des Dentalimplantats hineingesteckt wurde, dass sich die Verbreiterung des Schnappverschlusses apikal vom Unterschnitt an der Innenwand der Ausnehmung befindet, bewegt sich der Schnappverschluss zurück in seine ursprüngliche Position. Dieses Zurückfedern bzw. Zurückverformung des Schnappverschlusses in den verbreiterten Raum apikal des Unterschnitts wird im Rahmen der vorliegenden Erfindung auch als "einrasten" bezeichnet. Der Schnappverschluss ist beispielsweise in den Unterschnitt der Ausnehmung des Dentalimplantats eingerastet, wenn sich die Verbreiterung des Schnappverschlusses apikal vom Unterschnitt an der Innenwand der Ausnehmung befindet und sich der Schnappverschluss in seine ursprüngliche Position zurückbewegt hat. In der eingerasteten Position ist die nach außen gerichtete Verbreiterung des Schnappverschlusses apikal des Unterschnitts an der Innenwand der Ausnehmung des Dentalimplantats positioniert. Hierdurch sind Adapter und Dentalimplantat über eine Schnappverbindung miteinander verbunden.

Eine Trennung von Adapter und Dentalimplantat erfolgt durch Einwirken einer nach koronal gerichteten Zugkraft in Axialrichtung. Hierdurch wird der Adapter aus dem Dentalimplantat herausgezogen, wobei sich der Schnappverschluss nach innen verbiet oder verformt, wenn die Verbreiterung des Schnappverschlusses am Unterschnitt, der sich an der Innenseite der Ausnehmung des Dentalimplantats befindet, vorbeigezogen wird.

Dies zeigt einen großen Vorteil der mit Hilfe des Schnappverschlusses gebildeten Verbindung zwischen Adapter und Implantat, nämlich dass die Verbindung reversibel ist durch Hineinschieben und Herausziehen des apikalen Endes des Adapters aus der koronalen Ausnehmung des Implantats. Hierbei wird der Schnappverschluss jeweils nach innen verbiegt oder verformt, wenn die Verbreiterung am Unterschnitt an der Innenseite der Ausnehmung des Dentalimplantats vorbeigeschoben wird.

Ein weiterer Vorteil der durch den Schnappverschluss hergestellten Verbindung von Adapter und Implantat ist, dass die Kraft, die aufgewendet werden muss, um die Verbindung herzustellen und zu lösen, variabel gestaltbar ist. Zum einen hängt die notwendige Kraftaufwendung von der Steifigkeit bzw. Biegefestigkeit des Materials ab, aus dem der Schnappverschluss hergestellt ist. Zum anderen kann die notwendige Kraftaufwendung über die Ausgestaltung der Verbreiterung des Schnappverschlusses bestimmt werden. Je steiler die Verbreiterung des Schnappverschlusses nach außen hin zunimmt, desto mehr Kraft muss aufgewendet werden, um die Verbreiterung des Schnappverschlusses am Unterschnitt an der Innenseite der Ausnehmung des Dentalimplantats vorbeizuschieben. Die Verbreiterung des Schnappverschlusses kann apikal und koronal vom Scheitelpunkt der Verbreiterung unterschiedlich ausgestaltet sein, so dass für das Lösen und das Herstellen der Schnappverbindung unterschiedlich viel Kraft aufgewendet werden muss.

Der Begriff "Unterschnitt" bezieht sich im Rahmen der vorliegenden Erfindung insbesondere auf eine Verengung an der Innenwand der Ausnehmung des Dentalimplantats. Unterhalb des Unterschnitts, also in apikaler Richtung entlang der Längsachse des Dentalimplantats, hat die Ausnehmung des Dentalimplantats einen größeren Durchmesser als im Bereich des Unterschnitts.

Unter "Drehsicherungsmitteln" im Sinne der vorliegenden Erfindung sind insbesondere zueinander komplementäre Strukturen an miteinander zu verbindenden Komponenten oder Bauteilen zu verstehen, die eine unabhängige Rotation der verbundenen Bauteile weitestgehend verhindern. Komplementäre Strukturen sind insbesondere solche, die zwar gegensätzlich sind, aber sich im zusammengesetzten Zustand ergänzen und ineinander fügen. Entsprechend sind komplementäre Drehsicherungsmittel an den miteinander zu verbindenden Bauteilen Strukturen, die im verbundenen Zustand ineinandergreifen, was eine unabhängige Rotationsbewegung der verbundenen Bauteile verhindert. Drehsicherungsmittel können z.B. gebildet werden von Vorsprüngen aus einer Fläche eines Bauteils, die in komplementäre Aussparungen einer gegenüberliegenden Fläche eingreifen, wenn die Bauteile miteinander verbunden werden.

Im Rahmen der vorliegenden Erfindung sind Drehsicherungsmittel als Strukturen am koronalen Ende des Implantats und am apikalen Ende des Adapters ausgebildet. In einer bevorzugten Ausführungsform der vorliegenden Erfindung sind Drehsicherungsmittel am apikalen Ende des Adapters als eine Reihe von abwechselnd nebeneinander liegenden Vorsprüngen und Aussparungen ausgebildet, die Drehsicherungsmitteln am koronalen Ende des Implantats gegenüber liegen. Die Drehsicherungsmittel am koronalen Ende des Implantats sind gemäß dieser Ausführungsform als eine Reihe von abwechselnd nebeneinander liegenden Aussparungen und Vorsprünge ausgebildet, die komplementär zu den Vorsprüngen und Aussparungen der Drehsicherungsmittel am apikalen Ende des Adapters angeordnet sind. Im verbundenen Zustand greifen die Vorsprünge der Drehsicherungsmittel des Adapters in die Aussparungen der Drehsicherungsmittel des Implantats und die Vorsprünge der Drehsicherungsmittel des Implantats greifen in die Aussparungen der Drehsicherungsmittel des Adapters.

In einer weiteren bevorzugten Ausführungsform der vorliegenden Erfindung sind Drehsicherungsmittel am apikalen Ende des Adapters als eine Reihe von abwechselnd nebeneinander liegenden Erhebungen/Verbreiterungen und Vertiefungen ausgebildet, die Drehsicherungsmitteln am koronalen Ende des Implantats gegenüber liegen. Die Drehsicherungsmittel am koronalen Ende des Implantats sind gemäß dieser Ausführungsform als eine Reihe von abwechselnd nebeneinander liegenden Vertiefungen und Erhebungen/Verbreiterungen ausgebildet, die komplementär zu den Erhebungen/Verbreiterungen und Vertiefungen der Drehsicherungsmittel am apikalen Ende des Adapters angeordnet sind, so dass diese im zusammengesetzten Zustand komplementär ineinander greifen.

Dem Fachmann sind weitere Ausführungsbeispiele entsprechender Strukturen bekannt, die die Funktion von Drehsicherungsmitteln erfüllen und an prothetischen Komponenten sowie implantologischen Instrumenten, die zum Einbringen von prothetischen Komponenten verwendet werden, ausgebildet sind.

Drehsicherungsmittel können in bevorzugten Ausführungsformen des erfindungsgemäßen zweiteiligen Adapters an der apikalen Fläche der Kopfstruktur des ersten Teils des Adapters und der koronalen Fläche des Konter-Rings ausgebildet sein. In einer Ausführungsform sind als Drehsicherungsmittel an der koronalen Fläche des Konter-Rings mindestens zwei Vorsprünge vorhanden, die in koronaler Richtung aus der Fläche herausragen. An der apikalen Fläche der Kopfstruktur des ersten Teils des Adapters sind mindestens zwei Aussparungen vorhanden, die zu den Vorsprüngen in der koronalen Fläche des Konter-Rings komplementär sind und diese im zusammengesetzten Zustand des erfindungsgemäßen zweiteiligen Adapters und des Implantats aufnehmen. Hierdurch wird eine vom ersten Teil des Adapters und dem Implantat unabhängige Rotation des Konter-Rings um die Längsachse der Anordnung verhindert.

Im Rahmen der vorliegenden Erfindung ist unter dem Begriff "Kopfstruktur" eine Struktur zu verstehen, die am koronalen Ende des Adapters ausgebildet ist. Die Kopfstruktur wird zum Herstellen einer Wirkverbindung zwischen dem Adapter und einem Einbringinstrument genutzt. Die Form der Kopfstruktur kann verschiedenartig ausgestaltet sein und richtet sich nach den Erfordernissen der genutzten Einbringinstrumente.

Die Kopfstruktur kann insbesondere verschiedene Schraubenkopf-Formen enthalten. Mögliche Ausgestaltungsformen der Kopfstruktur können als Formen enthalten, ohne Limitierung, Flachkopf, Rundkopf, Sechskantkopf, Senkkopf, Senkrundkopf (Linsenkopf), Zylinderkopf, Außen-Sechskant, Außen-Vierkant, Bristol, Clutch Typ, Clutch Typ G, Doppel-Vierkant (Double-square), Double hex, Einweg-Schlitz, Frearson, HexStix, Innen-Dreikant (TA), Innen-Sechskant (Inbus, Allen), Innen-Sechskant mit Stift, Innen-Vierkant (Robertson), Innen-Vierkant mit Stift, Kreuzschlitz, Line männlich, Line weiblich, Line weiblich mit Stift, LocTec, Mortorq, Pentagon, Pentalob, Phillips-Recess (Phillips), Phillips-Recess mit Stift, Polydrive (Ribe), Pozidriv, Schlitz, Spanner, Spline, Supadriv, Torq-Set, Torx (Außen-Sechsrund), Torx (Innen-Sechsrund), Torx mit Stift, Torx Plus, Torx Plus Security (IPR), TP3 (tri-lobe, Reuleaux-Dreieck), Tri-point, Tri-Wing, TTAP oder XZN (Innen-Vielzahn, Triple Square), oder Kombinationen der genannten Formen.

Unter "Einbringinstrument" oder "Einbringwerkzeug" ist insbesondere ein Instrument zu verstehen, das zum Zweck des Einbringens des Implantats in den Knochen mit der Kopfstruktur eines erfindungsgemäßen Adapters verbunden wird. Der Begriff Einbringinstrument umfasst, ohne Limitierung, Einbringwerkzeuge, implantologische Instrumente, Ratschen, Ratschenadapter, Halteschlüssel, Winkelstücke, Winkelstückadapter, Ratschenschlüssel, Imbusschlüssel, Steckeinsatz, Steckschlüssel, Nuss und Stecknuss.

Prothetische Komponenten umfassen, ohne Limitierung, Abutment, verschraubbare und zementierte implantatgetragene Zahnkronen und Brücken, Druckknöpfe/Locator, Magnete, Stegkonstruktionen, Primärkronen für Teleskopprothesen, Schienen, Bisshebungsschienen, an Implantaten verschraubbare Verbandplatten, Prothesen und Provisorien.

Unter einem "Konter-Ring" im Sinne der vorliegenden Erfindung ist insbesondere ein Ring zu verstehen, in dessen Ausnehmung der apikale Teil des erfindungsgemäßen Adapters bzw. der apikale Teil des ersten Teils des erfindungsgemäßen zweiteiligen Adapters angeordnet sein kann. Der Begriff "Konter" ergibt sich aus der Funktion des Rings, der der Krafteinwirkung durch den ersten Teil des zweiteiligen Adapters auf das Implantat bei Trennung der Wirkverbindung zwischen Adapter und Implantat entgegenwirkt. Dies geschieht durch Einwirken einer Kraft, die nach apikal gerichtet ist und an den Fixierungsstrukturen des Konter-Rings ansetzt. Hierdurch wird der Ring auf dem koronalen Ende des Implantats fixiert.

"Fixierungsstrukturen" im Sinne der vorliegenden Erfindung umfassen alle Arten von Strukturen an der Außenseite des Konter-Rings, die die Positionierung und Handhabung des Rings erleichtern. Hierbei kann es sich, ohne Limitierung, um verschieden ausgestaltete Vorsprünge aus der Außenwand sowie um Aussparungen, Vertiefungen oder Löcher in der Außenwand handeln. Die Fixierungsstrukturen dienen als Ansatzpunkte am Konter-Ring für geeignete Instrumente, insbesondere implantologische Instrumente, die in die Fixierungsstrukturen greifen. Geeignete Instrumente umfassen, ohne Limitierung, Pinzetten, deren Greifflächen komplementär zu den jeweiligen Fixierungsstrukturen sind, sowie Sonden, Hakenschlüssel, Zapfenschlüssel, Stirnlochschlüssel und Zapfenimbus.

Das Material des erfindungsgemäßen zweiteiligen Adapters muss den mechanischen Belastungen, die beim Einbringen des Implantats in den Knochen auftreten, grundsätzlich standhalten. Mögliche Materialien umfassen, ohne Limitierung, Titan, Titanlegierungen, Titan-Zirkonium-Legierung, Zirkoniumdioxid, Keramik, Gold, hochgoldhaltige Legierungen, goldreduzierte Legierungen, edelmetallfreie Legierungen, Galvano, Stahl, Edelstahl und Kunststoffe. Mögliche Kunststoffe umfassen insbesondere Polyetherketone (PEK) Polyetheretherketon (PEEK), Polyetherketonketon (PEKK), Polyaryletherketone (PAEK), Polyoxymethylen (POM), Polymethylmethacrylat (PMMA), Polycarbonat, Polypropylen Polyamide und Nylon, und Kunststoffmischungen aus diesen Kunststoffen. Die Kunststoffe können hierbei insbesondere als faserverstärkte und compoundierte Kunststoffe genutzt werden.

### Figuren und Ausführungsbeispiel:

Besondere Ausführungsbeispiele der Erfindung werden nunmehr anhand von Figuren beispielhaft beschrieben, ohne jedoch auf diese beschränkt zu sein; es zeigt:
Figur 1: Seitenansicht eines Adapters, der den ersten Teil eines erfindungsgemäßen zweiteiligen Adapters darstellt.
Figur 2: Seitenansicht eines Adapters, der den ersten Teil eines erfindungsgemäßen zweiteiligen Adapters darstellt und für eine irreversible Verbindung mit einem geeigneten Konter-Ring, der den zweiten Teil des erfindungsgemäßen zweiteiligen Adapters darstellt, geeignet ist.
Figur 3: Schräge Draufsicht auf die koronale Fläche eines Konter-Rings, der den zweiten Teil eines erfindungsgemäßen zweiteiligen Adapters darstellt.
Figur 4: Schräge Draufsicht auf die koronale Fläche eines Konter-Rings, der den zweiten Teil eines erfindungsgemäßen zweiteiligen Adapters darstellt und für eine irreversible Verbindung mit einem geeigneten ersten Teil des erfindungsgemäßen zweiteiligen Adapters (Adapter) geeignet ist.
Figur 5: Seitenansicht eines erfindungsgemäßen zweiteiligen Adapters, wobei der apikale Teil des Adapters in der zentralen Ausnehmung des Konter-Rings angeordnet ist.
Figur 6: Seitenansicht eines erfindungsgemäßen zweiteiligen Adapters und eines Dentalimplantats im zusammengesetzten Zustand.
Figur 7: Schräge Untenansicht eines Adapters, an dessen apikalem Teil drei Schnappverschlüsse ausgebildet sind, und der (a) drei oder (b) sechs apikale Drehsicherungsmittel aufweist.
Figur 8: Schräge Untenansicht eines Adapters, an dessen apikalem Teil drei flexible Schnappverschlüsse im Bereich der Drehsicherungsausgebildet sind, und der (a) drei oder (b) sechs apikale Drehsicherungsmittel aufweist.
Figur 9: Schräge Untenansicht eines Adapters, an dessen apikalem Teil (a) drei oder (b) sechs starre Schnappverschlüsse im Bereich der (a) drei oder (b) sechs apikalen Drehsicherungsmittel ausgebildet sind.
Figur 10: Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 2 und 7 und beim zweiten Teil um einen Konter-Ring gemäß Figur 4 handelt.
Figur 11: Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 8 und beim zweiten Teil um einen Konter-Ring gemäß Figur 4 handelt.
Figur 12: Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 9 und beim zweiten Teil um einen Konter-Ring gemäß Figur 4 handelt.
Figur 13: Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 1 und 7 und beim zweiten Teil um einen Konter-Ring gemäß Figur 3 handelt.

Alle Merkmale der Zeichnungen sind nicht nur im Zusammenhang der dargestellten bevorzugten Vorrichtung offenbart und beansprucht, sondern auch als Einzelmerkmale. Bei diesen offenbarten Merkmalen gemäß der Figuren kann es sich um positive wie auch negative Merkmale handeln. Demgemäß ist jedes einzelne dargestellte Merkmal (positives oder negatives Merkmal) der Figuren oder jedes in der Figurenbeschreibung offenbarte Merkmal mit anderen bevorzugten Merkmalen der Beschreibung oder der Ansprüche als kombinierbar offenbart.

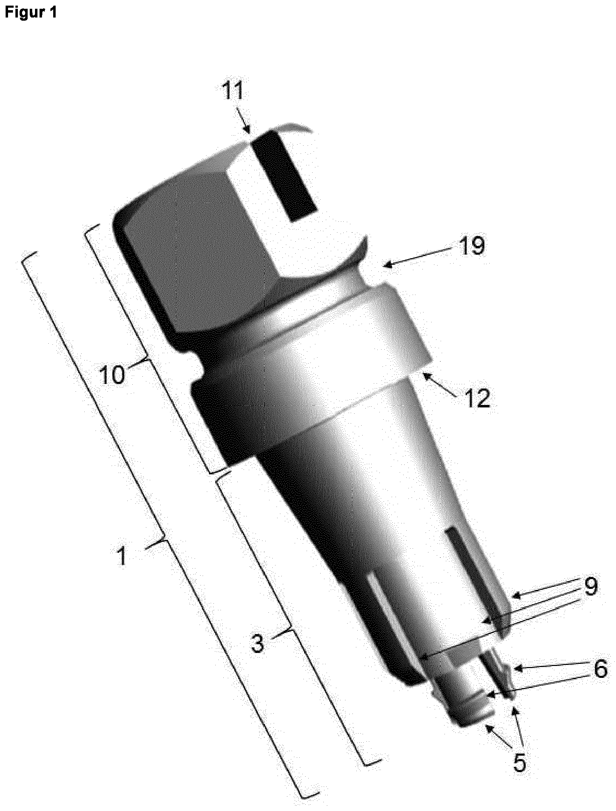

Figur 1 zeigt die Seitenansicht eines Adapters (1), der den ersten Teil eines erfindungsgemäßen zweiteiligen Adapters zum Einbringen eines Dentalimplantats in den Knochen darstellt. Der Adapter (1) hat eine längliche Form und umfasst einem apikalen Teil (3) und eine Kopfstruktur (10) am koronalen Ende des Adapters (1). Am apikalen Teil des Adapters sind drei nach apikal gerichtete längliche Schnappverschlüsse (5) ausgebildet, die Verbreiterungen (6) aufweisen, die von der Axialrichtung nach außen gerichtet sind, wobei die drei Schnappverschlüsse (5) zirkulär symmetrisch um die Längsachse des Adapters angeordnet sind. Zudem sind am apikalen Teil (3) des Adapters (1) apikale Drehsicherungsmittel (9) ausgebildet in Form einer Reihe von abwechselnd nebeneinander liegenden Erhebungen und Vertiefungen. An der Kopfstruktur (10) ist eine Positionsmarkierung (11) der Drehsicherungsmittel (9) in Form einer Kerbe (11) vorhanden. Der Durchmesser der Kopfstruktur (10) des Adapters (1) ist im Vergleich zum apikalen Teil (3) des Adapters (1) vergrößert und am apikalen Ende der Kopfstruktur (10) befindet sich eine Fläche (12), die gegenüber der Axialrichtung des Adapters rechtwinkelig abgewinkelt ist. Im mittleren Bereich der Kopfstruktur (10) ist eine zirkuläre Vertiefung (19) ausgebildet, die parallel zur Fläche (12) am apikalen Ende der Kopfstruktur (10) des Adapters (1) zirkulär um die Kopfstruktur (10) verläuft. Koronal von der zirkulären Vertiefung ist die Kopfstruktur (10) als Sechskant-Schraubenkopf ausgebildet.

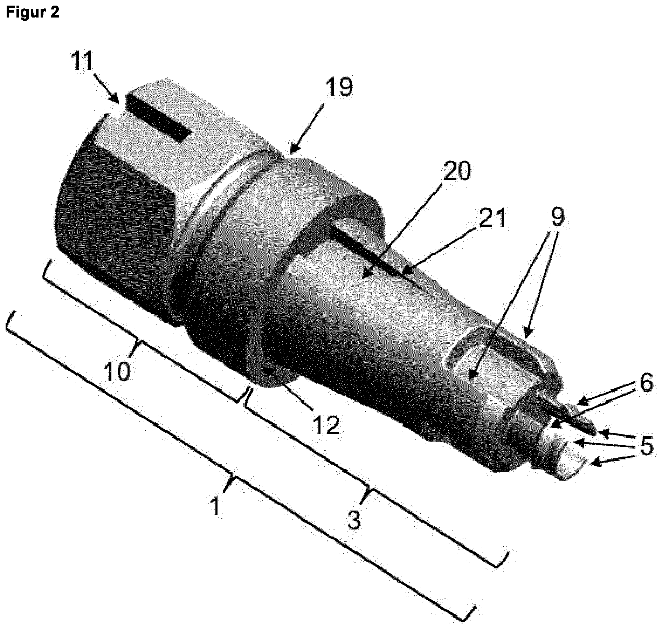

Figur 2 zeigt die Seitenansicht eines Adapters (1), der den ersten Teil eines erfindungsgemäßen zweiteiligen Adapters zum Einbringen eines Dentalimplantats in den Knochen darstellt und für eine irreversible Verbindung mit einem geeigneten zweiten Teil des erfindungsgemäßen zweiteiligen Adapters (Konter-Ring) geeignet ist. Der Adapter (1) hat eine längliche Form und umfasst einen apikalen Teil (3) und eine Kopfstruktur (10) am koronalen Ende des Adapters (1). Am apikalen Teil (3) des Adapters (1) sind drei nach apikal gerichtete längliche Schnappverschlüsse (5) ausgebildet, die Verbreiterungen (6) aufweisen, die von der Axialrichtung nach außen gerichtet sind, wobei die drei Schnappverschlüsse (5) zirkulär symmetrisch um die Längsachse des Adapters angeordnet sind. Zudem sind am apikalen Teil (3) des Adapters (1) apikale Drehsicherungsmittel (9) ausgebildet in Form einer Reihe von abwechselnd nebeneinander liegenden Erhebungen und Vertiefungen. An der Kopfstruktur (10) ist eine Positionsmarkierung (11) der Drehsicherungsmittel (9) in Form einer Kerbe (11) vorhanden. Der Durchmesser der Kopfstruktur (10) des Adapters (1) ist im Vergleich zum apikalen Teil (3) des Adapters (1) vergrößert und am apikalen Ende der Kopfstruktur (10) befindet sich eine Fläche (12), die gegenüber der Axialrichtung des Adapters rechtwinkelig abgewinkelt ist. Im mittleren Bereich der Kopfstruktur (10) ist eine zirkuläre Vertiefung (19) ausgebildet, die parallel zur Fläche (12) am apikalen Ende der Kopfstruktur (10) des Adapters (1) zirkulär um die Kopfstruktur (10) verläuft. Koronal von der zirkulären Vertiefung ist die Kopfstruktur (10) als Sechskant-Schraubenkopf ausgebildet. Am apikalen Teil (3) des Adapters (1) befinden sich zwei einander gegenüberliegende rechteckige Vertiefungen (20), deren Seiten jeweils parallel und rechtwinkelig zur Axialrichtung des Adapters verlaufen. Die koronale, rechtwinkelig zur Axialrichtung des Adapters verlaufende Begrenzung der rechteckigen Vertiefungen (20) wird durch die Fläche (12) am apikalen Ende der Kopfstruktur (10) des Adapters (1) gebildet. Am ihrem apikalen Ende wird die rechteckige Vertiefung (20) durch eine nach koronal gerichtete Fläche (21) begrenzt, die gegenüber der Axialrichtung des Adapters rechtwinkelig abgewinkelt ist und eine Verbreiterung des apikalen Teils (3) des Adapters (1) gegenüber der rechteckigen Vertiefung (20) darstellt.

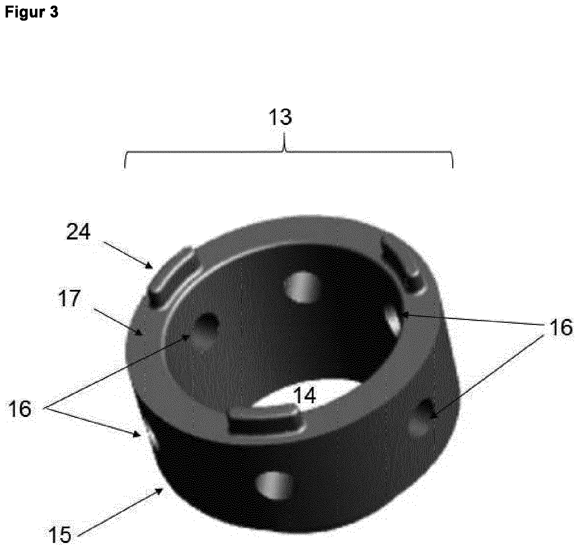

Figur 3 zeigt einen Konter-Ring (13), der den zweiten Teil eines zweiteiligen Adapters zum Einbringen eines Dentalimplantats in den Knochen darstellt, und eine zentrale Ausnehmung (14) aufweist, in einer schrägen Draufsicht auf die koronale Fläche (17) des Konter-Rings (13). An der Außenseite (15) des Konter-Rings (13) sind Fixierungsstrukturen (16) in Form von sechs symmetrisch über den Ring verteilten Aussparungen (16) ausgebildet, die als Löcher (16) in der Außenwand (15) des Konter-Rings (13) ausgestaltet sind. Auf der koronalen Fläche (17) des Konter-Rings (13) sind drei Drehsicherungsmittel (24) in Form von drei symmetrisch über die koronale Fläche (17) des Konter-Rings (13) verteilten, aus der koronalen Fläche (17) herausragenden Vorsprüngen (18) ausgebildet.

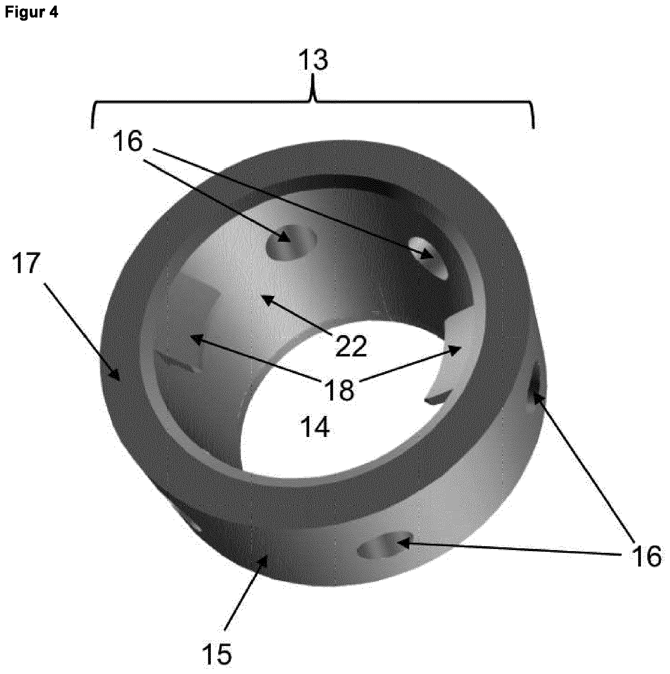

Figur 4 zeigt einen Konter-Ring (13), der den zweiten Teil eines zweiteiligen Adapters zum Einbringen eines Dentalimplantats in den Knochen darstellt, und eine zentrale Ausnehmung (14) aufweist, in einer schrägen Draufsicht auf die koronale Fläche (17) des Konter-Rings (13). An der Außenseite (15) des Konter-Rings (13) sind Fixierungsstrukturen (16) in Form von sechs symmetrisch über den Ring verteilten Aussparungen (16) ausgebildet, die als Löcher (16) in der Außenwand (15) des Konter-Rings (13) ausgestaltet sind. An der Innenfläche (22) des Konter-Rings (13) sind koronal zwei einander gegenüber liegende Flossen (18) vorhanden, die schräg nach apikal in die zentrale Ausnehmung (14) des Konter-Rings (13) hineinragen.

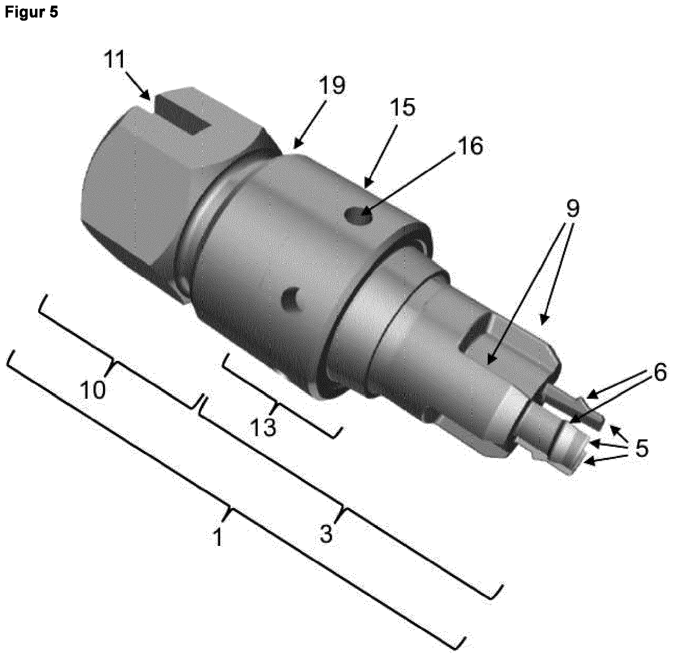

Figur 5 zeigt die Seitenansicht eines zweiteiligen Adapters zum Einbringen eines Dentalimplantats in den Knochen umfassend den Adapter (1) aus Figur 1 und den Konter-Ring (13) aus Figur 3 bzw. den Adapter (1) aus Figur 2 und den Konter-Ring (13) aus Figur 4, wobei der apikale Teil (3) des Adapters (1) in der zentralen Ausnehmung (14) des Konter-Rings (13) angeordnet ist. Der Außendurchmesser des Konter-Rings (13) ist in etwa gleich groß wie der Außendurchmesser der Kopfstruktur (10) des Adapters (1). Der Konter-Ring (13) ist so weit wie mögliche nach koronal über den apikalen Teil (3) des Adapters (1) geschoben, so dass die koronale Fläche (17) des Konter-Rings (13) die apikale Fläche (12) der Kopfstruktur (10) des Adapters (1) berührt. Der apikale Teil (3) des Adapters (1) ragt apikal aus der zentralen Ausnehmung (14) des Konter-Rings (13) heraus, so dass die apikalen Drehsicherungsmittel (9) und die drei Schnappverschlüsse (5) mit den nach außen gerichteten Verbreiterungen (6) nicht von dem Konter-Ring (13) verdeckt werden.

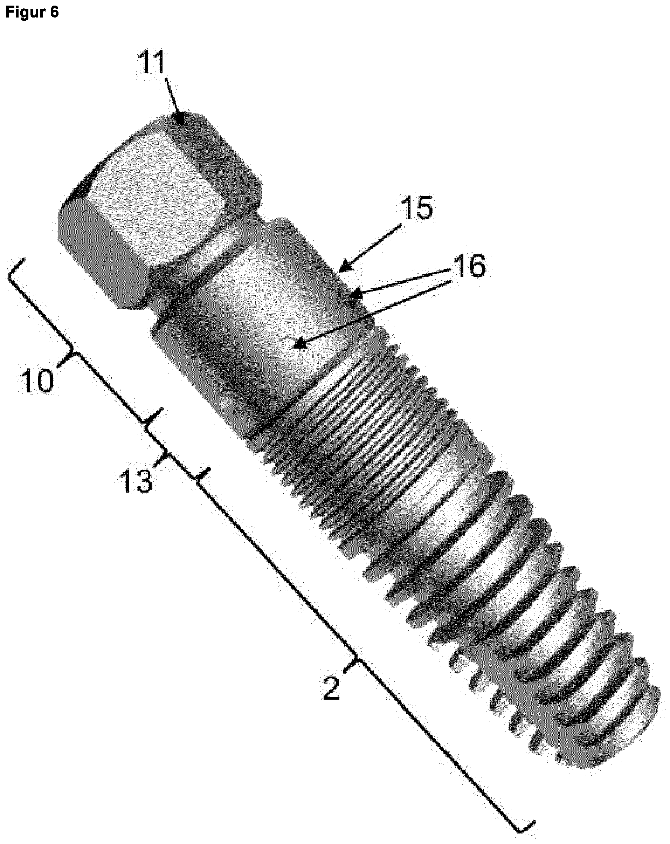

Figur 6 zeigt die Seitenansicht einer Anordnung umfassend den in Figur 5 dargestellten zweiteiligen Adapter zum Einbringen eines Dentalimplantats in den Knochen und ein längliches Dentalimplantat (2), wobei der apikale Teil (3) des Adapters (1) in der zentralen Ausnehmung (14) des Konter-Rings (13) angeordnet ist. Der apikal aus der Ausnehmung des Konter-Rings (13) herausragende Teil des Adapters (1) (dargestellt in Figur 5), der die nach apikal gerichteten Schnappverschlüsse (5) umfasst, ist in der koronalen Ausnehmung (4) des Dentalimplantats (2) angeordnet. Die Außendurchmesser des Konter-Rings (13), der Kopfstruktur (10) und des Dentalimplantats (2) sind in etwa gleich groß.

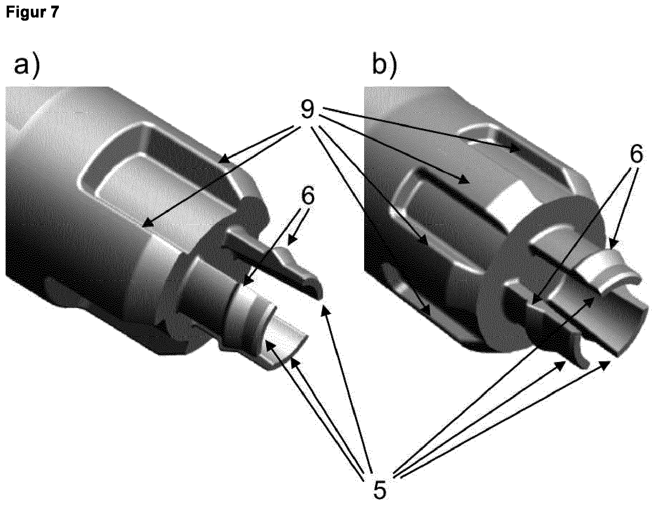

Figur 7 zeigt das apikale Ende des apikalen Teils (3) eines Adapters (1), der den ersten Teil eines erfindungsgemäßen zweiteiligen Adapters zum Einbringen eines Dentalimplantats in den Knochen darstellt. Am apikalen Teil (3) des Adapters (1) sind drei nach apikal gerichtete längliche Schnappverschlüsse (5) ausgebildet, die Verbreiterungen (6) aufweisen, die von der Axialrichtung nach außen gerichtet sind, wobei die drei Schnappverschlüsse (5) zirkulär symmetrisch um die Längsachse des Adapters angeordnet sind. In der in Figur 7a) dargestellten bevorzugten Ausführungsform des Adapters (1) sind am apikalen Teil (3) des Adapters (1) apikale Drehsicherungsmittel (9) in Form von jeweils 3 abwechselnd nebeneinander liegenden Erhebungen und Vertiefungen ausgebildet, die zirkulär symmetrisch um das apikale Ende des Adapters (1) angeordnet sind. In der in Figur 7b) dargestellten bevorzugten Ausführungsform des Adapters (1) sind am apikalen Teil (3) des Adapters (1) apikale Drehsicherungsmittel (9) in Form von jeweils 6 abwechselnd nebeneinander liegenden Erhebungen und Vertiefungen ausgebildet, die zirkulär symmetrisch um das apikale Ende des Adapters (1) angeordnet sind.

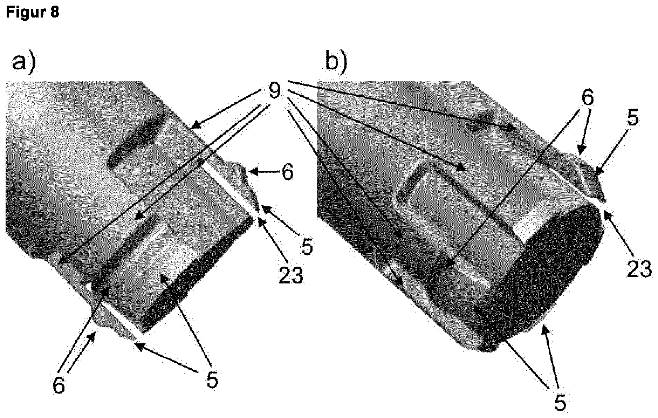

Figur 8 zeigt das apikale Ende des apikalen Teils (3) eines Adapters (1), der den ersten Teil eines erfindungsgemäßen zweiteiligen Adapters zum Einbringen eines Dentalimplantats in den Knochen darstellt. In Figur 8a) sind am apikalen Teil (3) des Adapters (1) apikale Drehsicherungsmittel (9) in Form von jeweils 3 abwechselnd nebeneinander liegenden Erhebungen und Vertiefungen ausgebildet, die zirkulär symmetrisch um das apikale Ende des Adapters (1) angeordnet sind. Die apikalen Enden der 3 Erhebungen der Drehsicherungsmittel (9) sind hierbei als Schnappverschlüsse (5) ausgebildet, die Verbreiterungen (6) aufweisen, die von der Axialrichtung nach außen gerichtet sind. Die 3 Erhebungen der apikalen Drehsicherungsmittel (9) umfassen zudem jeweils einen Spalt (23), der parallel zur Längsachse des Adapters durch das apikale Ende der Erhebung verläuft, wodurch die Schnappverschlüsse als Federn ausgebildet sind, die sich elastisch nach innen biegen lassen. In Figur 8b) sind am apikalen Teil (3) des Adapters (1) apikale Drehsicherungsmittel (9) in Form von jeweils 6 abwechselnd nebeneinander liegenden Erhebungen und Vertiefungen ausgebildet, die zirkulär symmetrisch um das apikale Ende des Adapters (1) angeordnet sind. Die apikalen Enden von 3 der 6 Erhebungen der Drehsicherungsmittel (9) sind hierbei als Schnappverschlüsse (5) ausgebildet, die Verbreiterungen (6) aufweisen, die von der Axialrichtung nach außen gerichtet sind. Die 3 Erhebungen, die als Schnappverschlüsse (5) ausgebildet sind, umfassen zudem jeweils einen Spalt (23), der parallel zur Längsachse des Adapters durch das apikale Ende der Erhebung verläuft, wodurch die Schnappverschlüsse als Federn ausgebildet sind, die sich elastisch nach innen biegen lassen. Zischen zwei Erhebungen, an denen federnde Schnappverschlüsse (5) ausgebildet sind, liegt jeweils eine Erhebung ohne Schnappverschluss.

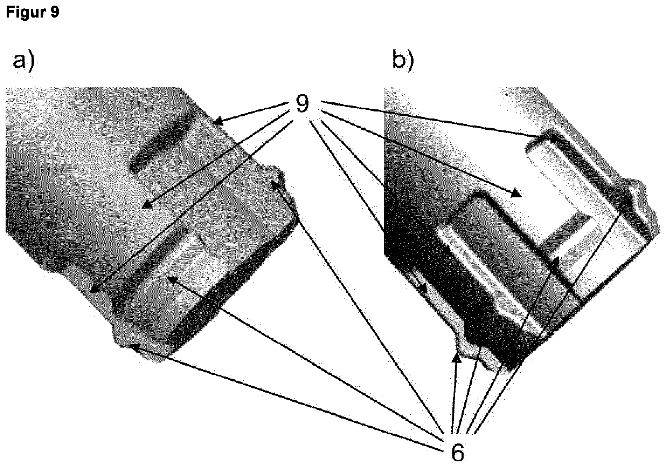

Figur 9 zeigt das apikale Ende des apikalen Teils (3) eines Adapters (1), der den ersten Teil eines erfindungsgemäßen zweiteiligen Adapters zum Einbringen eines Dentalimplantats in den Knochen darstellt. In Figur 9a) sind am apikalen Teil (3) des Adapters (1) apikale Drehsicherungsmittel (9) in Form von jeweils 3 abwechselnd nebeneinander liegenden Erhebungen und Vertiefungen ausgebildet, die zirkulär symmetrisch um das apikale Ende des Adapters (1) angeordnet sind. Die apikalen Enden der 3 Erhebungen der Drehsicherungsmittel (9) sind hierbei als Schnappverschlüsse (5) ausgebildet, die Verbreiterungen (6) aufweisen, die von der Axialrichtung nach außen gerichtet sind. In Figur 9b) sind am apikalen Teil (3) des Adapters (1) apikale Drehsicherungsmittel (9) in Form von jeweils 6 abwechselnd nebeneinander liegenden Erhebungen und Vertiefungen ausgebildet, die zirkulär symmetrisch um das apikale Ende des Adapters (1) angeordnet sind. Die apikalen Enden der 6 Erhebungen der Drehsicherungsmittel (9) sind hierbei als Schnappverschlüsse (5) ausgebildet, die Verbreiterungen (6) aufweisen, die von der Axialrichtung nach außen gerichtet sind.

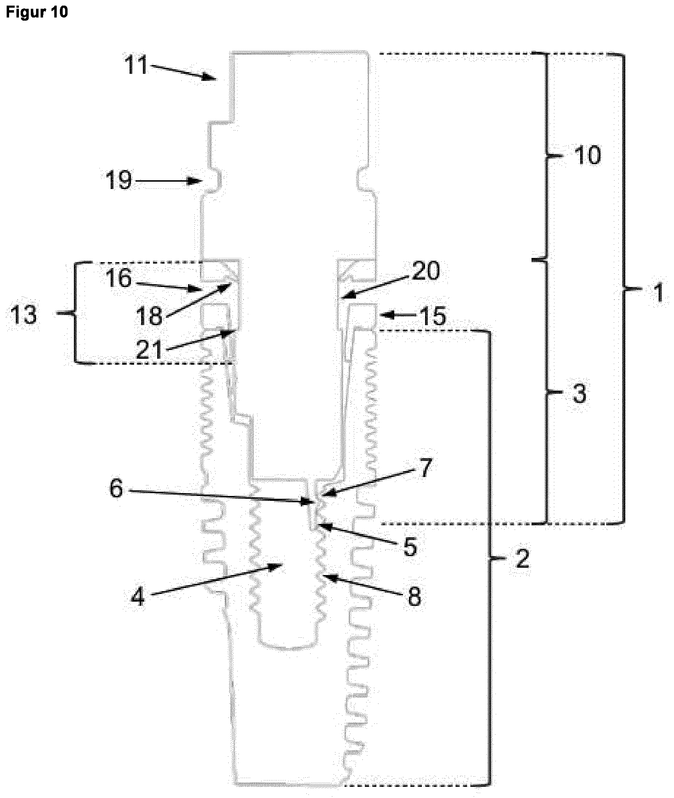

Figur 10 zeigt einen Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 2 und 7 und beim zweiten Teil um einen Konter-Ring gemäß Figur 4 handelt. Die von der Axialrichtung nach außen gerichteten Verbreiterungen (6) der Schnappverschlüsse (5) aus Figur 7 sind in einen Unterschnitt (7) an der Innenseite (8) der Ausnehmung (4) des Dentalimplantats (2) eingerastet. Der Unterschnitt (7) wird von einem Innengewinde an der Innenseite (8) der Ausnehmung (4) des Dentalimplantats (2) gebildet. An der Innenfläche (22) des Konter-Rings (13) sind koronal zwei einander gegenüber liegende Flossen (18) vorhanden, die nach apikal in die zentrale Ausnehmung (14) des Konter-Rings (13) hineinragen. Hierbei sind die Flossen (18) in den zu den Flossen (18) komplementär ausgebildeten rechteckigen Vertiefungen (20) am apikalen Teil (3) des Adapters (1) angeordnet. Die nach koronal gerichteten Flächen (21), die die rechteckigen Vertiefungen (20) an deren apikalen Enden begrenzen, verhindern ein Heruntergleiten des Konter-Rings (13) nach apikal über das Niveau hinaus, auf dem die Flossen (18) mit den nach koronal gerichteten Flächen (21) in Kontakt kommen. Entsprechend bilden die Flossen (18) mit den nach koronal gerichteten Flächen (21) eine irreversible Schnappverbindung bzw. Steckverbindung zwischen Adapter (1) und Konter-Ring (13). Zudem wird durch die Flossen (18), die komplementär in den rechteckigen Vertiefungen (20) am apikalen Teil (3) des Adapters (1) angeordnet sind, eine Rotation des Konter-Rings (13) um die Längsachse des Adapters (1) im zusammengesetzten Zustand verhindert. Die Flossen (18) und rechteckigen Vertiefungen (20) am apikalen Teil (3) des Adapters (1) bilden somit komplementäre Drehsicherungsmittel.

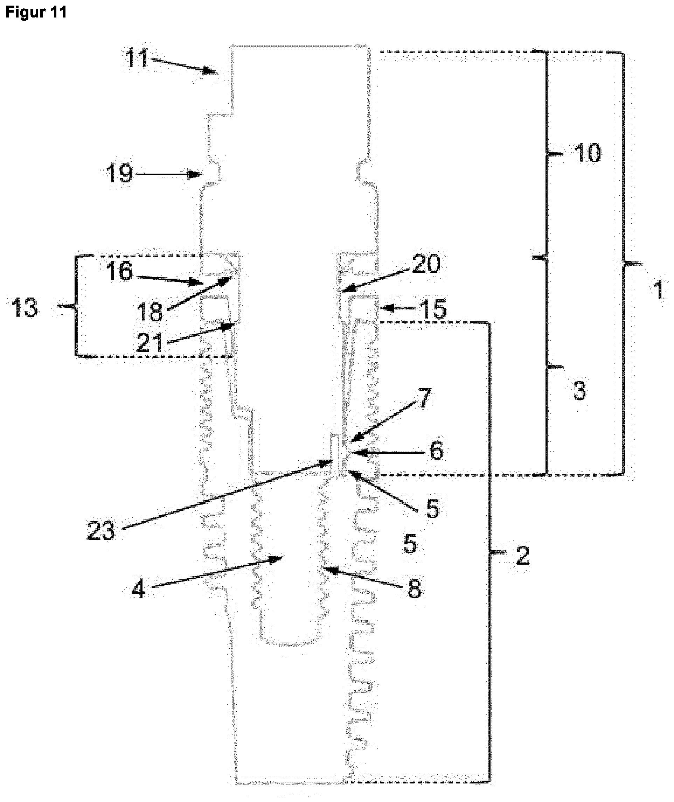

Figur 11 zeigt einen Längsschnitt einer Seitenansicht eines erfindungsgemäßen zweiteiligen Adapters und eines Dentalimplantats im zusammengesetzten Zustand, wobei es sich beim ersten Teil um einen Adapter gemäß Figur 8 und beim zweiten Teil um einen Konter-Ring gemäß Figur 4 handelt. Die von der Axialrichtung nach außen gerichteten Verbreiterungen (6) der Schnappverschlüsse (5) aus Figur 8 sind in einen Unterschnitt (7) an der Innenseite (8) der Ausnehmung (4) des Dentalimplantats (2) eingerastet. Der Unterschnitt (7) befindet sich im apikalen Bereich der Drehsicherungsmittel an der Innenseite (8) der Ausnehmung (4) des Dentalimplantats (2). Durch den Spalt (23) wird ein leichtes Trennen und Zusammenführen der Schnappverbindung zwischen dem Unterschnitt (7) und den Schnappverschlüssen (5) ermöglicht, indem sich die Schnappverschlüsse (5) elastisch nach innen biegen. An der Innenfläche (22) des Konter-Rings (13) sind koronal zwei einander gegenüber liegende Flossen (18) vorhanden, die nach apikal in die zentrale Ausnehmung (14) des Konter-Rings (13) hineinragen. Hierbei sind die Flossen (18) in den zu den Flossen (18) komplementär ausgebildeten rechteckigen Vertiefungen (20) am apikalen Teil (3) des Adapters (1) angeordnet. Die nach koronal gerichteten Flächen (21), die die rechteckigen Vertiefungen (20) an deren apikalen Enden begrenzen, verhindern ein Heruntergleiten des Konter-Rings (13) nach apikal über das Niveau hinaus, auf dem die Flossen (18) mit den nach koronal gerichteten Flächen (21) in Kontakt kommen. Entsprechend bilden die Flossen (18) mit den nach koronal gerichteten Flächen (21) eine irreversible Schnappverbindung zwischen Adapter (1) und Konter-Ring (13). Zudem wird durch die Flossen (18), die komplementär in den rechteckigen Vertiefungen (20) am apikalen Teil (3) des Adapters (1) angeordnet sind, eine Rotation des Konter-Rings (13) um die Längsachse des Adapters (1) im zusammengesetzten Zustand verhindert. Die Flossen (18) und rechteckigen Vertiefungen (20) am apikalen Teil (3) des Adapters (1) bilden somit komplementäre Drehsicherungsmittel.

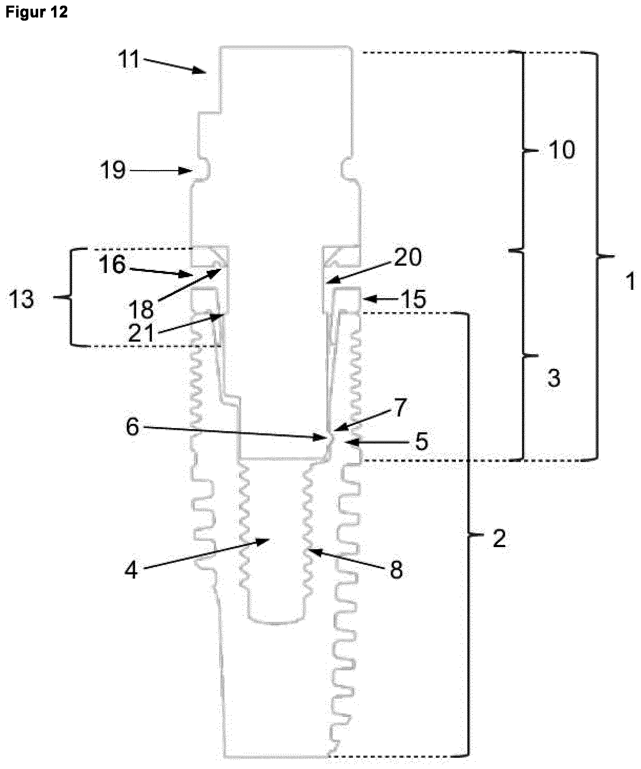

Figur 12 zeigt einen Längsschnitt einer Seitenansicht eines erfindungsgemäßen zweiteiligen Adapters und eines Dentalimplantats im zusammengesetzten Zustand, wobei es sich beim ersten Teil um einen Adapter gemäß Figur 9 und beim zweiten Teil um einen Konter-Ring gemäß Figur 4 handelt. Die von der Axialrichtung nach außen gerichteten Verbreiterungen (6) der Schnappverschlüsse (5) aus Figur 9 sind in einen Unterschnitt (7) an der Innenseite (8) der Ausnehmung (4) des Dentalimplantats (2) eingerastet. Der Unterschnitt (7) befindet sich im apikalen Bereich der Drehsicherungsmittel an der Innenseite (8) der Ausnehmung (4) des Dentalimplantats (2). An der Innenfläche (22) des Konter-Rings (13) sind koronal zwei einander gegenüber liegende Flossen (18) vorhanden, die nach apikal in die zentrale Ausnehmung (14) des Konter-Rings (13) hineinragen. Hierbei sind die Flossen (18) in den zu den Flossen (18) komplementär ausgebildeten rechteckigen Vertiefungen (20) am apikalen Teil (3) des Adapters (1) angeordnet. Die nach koronal gerichteten Flächen (21), die die rechteckigen Vertiefungen (20) an deren apikalen Enden begrenzen, verhindern ein Heruntergleiten des Konter-Rings (13) nach apikal über das Niveau hinaus, auf dem die Flossen (18) mit den nach koronal gerichteten Flächen (21) in Kontakt kommen. Entsprechend bilden die Flossen (18) mit den nach koronal gerichteten Flächen (21) eine irreversible Schnappverbindung zwischen Adapter (1) und Konter-Ring (13). Zudem wird durch die Flossen (18), die komplementär in den rechteckigen Vertiefungen (20) am apikalen Teil (3) des Adapters (1) angeordnet sind, eine Rotation des Konter-Rings (13) um die Längsachse des Adapters (1) im zusammengesetzten Zustand verhindert. Die Flossen (18) und rechteckigen Vertiefungen (20) am apikalen Teil (3) des Adapters (1) bilden somit komplementäre Drehsicherungsmittel.

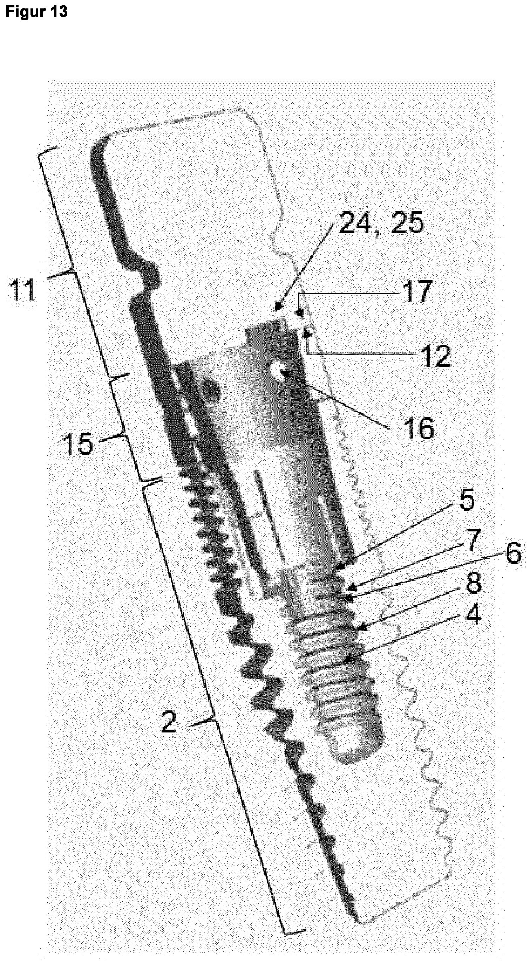

Figur 13 zeigt einen Längsschnitt einer Seitenansicht eines erfindungsgemäßen zweiteiligen Adapters und eines Dentalimplantats im zusammengesetzten Zustand, wobei es sich beim ersten Teil um einen Adapter gemäß der Figuren 1 und 7 und beim zweiten Teil um einen Konter-Ring gemäß Figur 3 handelt. Die von der Axialrichtung nach außen gerichteten Verbreiterungen (6) der Schnappverschlüsse (5) sind in einen Unterschnitt (7) an der Innenseite (8) der Ausnehmung (4) des Dentalimplantats (2) eingerastet. Der Unterschnitt (7) wird von einem Innengewinde an der Innenseite (8) der Ausnehmung (4) des Dentalimplantats (2) gebildet. Die Drehsicherungsmittel (18) an der koronalen Fläche des Konter-Rings (24), bestehend aus Vorsprüngen (24), die aus der koronalen Fläche (17) des Konter-Rings (13) herausragenden, sind in den komplementären Drehsicherungsmitteln (24) an der apikalen Fläche (12) der Kopfstruktur (10) des Adapters (1), bei denen es sich um Aussparungen (25) handelt, angeordnet.

### Bezeichnungsliste

- 1: Adapter
- 2: Dentalimplantat
- 3: Apikaler Teil des Adapters
- 4: Koronale Ausnehmung des Dentalimplantats
- 5: Schnappverschluss
- 6: Nach außen gerichtete Verbreiterung des Schnappverschlusses
- 7: Unterschnitt an der Innenseite der Ausnehmung des Dentalimplantats
- 8: Innenseite der Ausnehmung des Dentalimplantats
- 9: Apikale Drehsicherungsmittel des Adapters
- 10: Kopfstruktur des Adapters
- 11: Positionsmarkierung der Drehsicherungsmittel an der Kopfstruktur des Adapters (Kerbe)
- 12: Fläche am apikalen Ende der Kopfstruktur des Adapters
- 13: Konter-Ring
- 14: Zentraler Ausnehmung des Konter-Rings
- 15: Außenseite bzw. Außenwand des Konter-Rings
- 16: Fixierungsstrukturen/Aussparungen in der Außenwand des Rings
- 17: Koronale Fläche des Konter-Rings
- 18: Flosse an der Innenseite des Konter-Rings, die als Drehsicherungsmittel und Schnappverschluss fungiert
- 19: Zirkuläre Vertiefung
- 20: Rechteckige Vertiefung am apikalen Teil des Adapters
- 21: Nach koronal gerichtete Fläche am apikalen Ende der rechteckigen Vertiefungen am apikalen Teil des Adapters
- 22: Innenfläche des Konter-Rings
- 23: Spalt durch das apikale Ende der Erhebung der apikalen Drehsicherungsmittel des Adapters
- 24: Drehsicherungsmittel/Vorsprünge an der koronalen Fläche des Konter-Rings
- 25: Drehsicherungsmittel/Aussparungen an der apikalen Fläche der Kopfstruktur

## Patentansprüche

1. Zweiteilige Vorrichtung zum Einbringen eines Dentalimplantats (2) in einen Knochen, wobei
a. ein erster Teil ein länglicher Adapter (1) ist, an dessen apikalem Teil (3) mindestens ein Schnappverschluss (5) vorhanden ist, der bei Anordnung des apikalen Teils (3) des Adapter (1) in einer koronalen Ausnehmung (4) des Dentalimplantats (2) in mindestens eine komplementäre Struktur an der Innenseite (8) der Ausnehmung (4) des Dentalimplantats (2) einrastet und eine reversible Steckverbindung zwischen Adapter (1) und Dentalimplantat (2) herstellt, und
b. ein zweiter Teil ein Konter-Ring (13) ist, in dessen zentraler Ausnehmung (14) der apikale Teil (3) des Adapters (1) angeordnet ist,
**dadurch gekennzeichnet, dass** der Konter-Ring (13) entlang der Axialrichtung des Adapters (1) beweglich ist.

2. Zweiteilige Vorrichtung gemäß Anspruch 1, **dadurch gekennzeichnet, dass** der Schnappverschluss (5) eine von einer Axialrichtung des Adapters (1) nach außen gerichtete Verbreiterung (6) umfasst, wobei die Verbreiterung (6) bei Anordnung des apikalen Teils (3) des Adapters (1) in der koronalen Ausnehmung (4) des Dentalimplantats (2) in einen Unterschnitt (7) an einer Innenseite (8) der Ausnehmung (4) des Dentalimplantats (2) einrastet.

3. Zweiteilige Vorrichtung gemäß eines der vorherigen Ansprüche, **dadurch gekennzeichnet, dass** der Adapter (1) apikale Drehsicherungsmittel (9) umfasst.

4. Zweiteilige Vorrichtung gemäß eines der vorherigen Ansprüche, **dadurch gekennzeichnet, dass** ein koronales Ende des Adapters eine Kopfstruktur (10) umfasst.

5. Zweiteilige Vorrichtung gemäß Anspruch 4, **dadurch gekennzeichnet, dass** die Kopfstruktur (10) eine Positionsmarkierung (11) der Drehsicherungsmittel (9) aufweist.

6. Zweiteilige Vorrichtung gemäß Anspruch 5, **dadurch gekennzeichnet, dass** die Positionsmarkierung (11) der Drehsicherungsmittel (9) an der Kopfstruktur (10) eine Kerbe (11) ist.

7. Zweiteilige Vorrichtung gemäß eines der Ansprüche 4 bis 6, **dadurch gekennzeichnet, dass** die Kopfstruktur (10) im Vergleich zum apikalen Teil (3) des Adapters (1) einen vergrößerten Durchmesser hat, und dass sich am apikalen Ende der Kopfstruktur (10) eine Fläche (12) befindet, die gegenüber der Axialrichtung des Adapters abgewinkelt ist.

8. Zweiteilige Vorrichtung gemäß eines der Ansprüche 4 bis 7, **dadurch gekennzeichnet, dass** die Kopfstruktur (10) eine parallel zur Fläche (12) am apikalen Ende der Kopfstruktur (10) des Adapters (1) zirkulär um die Kopfstruktur (10) verlaufende Vertiefung (19) umfasst.

9. Zweiteilige Vorrichtung gemäß eines der vorherigen Ansprüche, **dadurch gekennzeichnet, dass** die Außenseite (15) des Konter-Rings (13) Fixierungsstrukturen (16) aufweist.

10. Zweiteilige Vorrichtung gemäß Anspruch 9, **dadurch gekennzeichnet, dass** es sich bei den Fixierungsstrukturen (16) an der Außenseite (15) des Konter-Rings (13) um Aussparungen (16) in der Außenwand des Rings handelt.

11. Zweiteilige Vorrichtung gemäß eines der vorherigen Ansprüche, **dadurch gekennzeichnet, dass** der Adapter (1) und der Konter-Rings (13) jeweils komplementäre Drehsicherungsmittel (18, 20, 24, 25) aufweisen.

12. Zweiteilige Vorrichtung gemäß eines der vorherigen Ansprüche, **dadurch gekennzeichnet, dass** der Adapter (1) und der Konter-Ring (13) irreversibel miteinander verbunden sind.

13. Zweiteilige Vorrichtung gemäß Anspruch 12, **dadurch gekennzeichnet, dass** an der Innenfläche (22) des Konter-Rings (13) mindestens ein Schnappverschluss (18) ausgebildet ist, der bei Anordnung des apikalen Teils (3) des Adapter (1) in der zentralen Ausnehmung (14) des Konter-Rings (13) in mindestens eine komplementäre Struktur (20) am apikalen Teil (3) des Adapters (1) einrastet und eine irreversible Steckverbindung zwischen Adapter (1) und Konter-Ring (13) herstellt, wobei der Konter-Ring (13) entlang der Axialrichtung des Adapters (1) beweglich ist.

## Claims

1. A two-part device for introducing a dental implant (2) into a bone, wherein
a. a first part is a longitudinal adapter (1), on the apical part (3) of which at least one snap lock (5) is present, which, when the apical part (3) of the adapter (1) is arranged in a coronal recess (4) of the dental implant (2), catches in at least one complementary structure on the inner side (8) of the recess (4) of the dental implant (2) and establishes a reversible plug connection between adapter (1) and dental implant (2), and
b. a second part is a counter-ring (13), in the central recess (14) of which the apical part (3) of the adapter (1) is arranged,
**characterized in that** the counter-ring (13) is mobile in the axial direction of the adapter (1).

2. The two-part device according to Claim 1, **characterized in that** the snap lock (5) comprises a widening (6) oriented from an axial direction of the adapter (1) outward, wherein, when the apical part (3) of the adapter (1) is arranged in the coronal recess (4) of the dental implant (2), the widening (6) catches in an undercut (7) on an inner side (8) of the recess (4) of the dental implant (2).

3. The two-part device according to either of the preceding claims, **characterized in that** the adapter (1) comprises apical anti-rotation means (9).

4. The two-part device according to any one of the preceding claims, **characterized in that** a coronal end of the adapter comprises a head structure (10).

5. The two-part device according to Claim 4, **characterized in that** the head structure (10) has a position marking (11) of the anti-rotation means (9).

6. The two-part device according to Claim 5, **characterized in that** the position marking (11) of the anti-rotation means (9) on the head structure (10) is a notch (11).

7. The two-part device according to any one of Claims 4 to 6, **characterized in that** the head structure (10) has an increased diameter in comparison to the apical part (3) of the adapter (1) and **in that**, on the apical end of the head structure (10), a surface (12) is located, which is angled with respect to the axial direction of the adapter.

8. The two-part device according to any one of Claims 4 to 7, **characterized in that** the head structure (10) comprises a depression (19) running parallel to the surface (12) on the apical end of the head structure (10) of the adapter (1) in a circular manner around the head structure (10).

9. The two-part device according to any one of the preceding claims, **characterized in that** the outer side (15) of the counter-ring (13) has fastening structures (16).

10. The two-part device according to Claim 9, **characterized in that** the fastening structures (16) on the outer side (15) of the counter-ring (13) are recesses (16) in the outer wall of the ring.

11. The two-part device according to any one of the preceding claims, **characterized in that** the adapter (1) and the counter-ring (13) in each case have complementary anti-rotation means (18, 20, 24, 25).

12. The two-part device according to any one of the preceding claims, **characterized in that** the adapter (1) and the counter-ring (13) are connected irreversibly to one another.

13. The two-part device according to Claim 12, **characterized in that**, on the inner surface (22) of the counter-ring (13), at least one snap lock (18) is formed, which, when the apical part (3) of the adapter (1) is arranged in the central recess (14) of the counter-ring (13), catches in at least one complementary structure (20) on the apical part (3) of the adapter (1) and establishes an irreversible plug connection between adapter (1) and counter-ring (13), wherein the counter-ring (13) is mobile in the axial direction of the adapter (1).

## Revendications

1. Dispositif à deux pièces destiné à introduire un implant dentaire (2) dans un os, dans lequel
a. une première pièce est un adaptateur longitudinal (1) sur la partie apicale (3) duquel se trouve au moins une fermeture à clic (5) qui s'encliquette lors de la disposition de la partie apicale (3) de l'adaptateur (1) dans une cavité coronale (4) de l'implant dentaire (2) dans au moins une structure complémentaire sur la face intérieure (8) de la cavité (4) de l'implant dentaire (2) et établit une connexion enfichable réversible entre l'adaptateur (1) et l'implant dentaire (2), et
b. une seconde pièce est une bague antagoniste (13) dans la cavité centrale (14) de laquelle la partie apicale (3) de l'adaptateur (1) est disposée,
**caractérisé en ce que** la bague antagoniste (13) est mobile le long de la direction axiale de l'adaptateur (1) .

2. Dispositif à deux pièces selon la revendication 1, **caractérisé en ce que** la fermeture à clic (5) comprend un élargissement (6) dirigé vers l'extérieur d'une direction axiale de l'adaptateur (1), l'élargissement (6) s'encliquetant lors de la disposition de la partie apicale (3) de l'adaptateur (1) dans la cavité coronale (4) de l'implant dentaire (2) dans une contre-dépouille (7) sur une face intérieure (8) de la cavité (4) de l'implant dentaire (2).

3. Dispositif à deux pièces selon l'une des revendications précédentes, **caractérisé en ce que** l'adaptateur (1) comprend un moyen d'anti-rotation apical (9).

4. Dispositif à deux pièces selon l'une des revendications précédentes, **caractérisé en ce qu'**une extrémité coronale de l'adaptateur comprend une structure de tête (10).

5. Dispositif à deux pièces selon la revendication 4, **caractérisé en ce que** la structure de tête (10) présente un marquage de position (11) du moyen d'anti-rotation (9).

6. Dispositif à deux pièces selon la revendication 5, **caractérisé en ce que** la marque de position (11) du moyen d'anti-rotation (9) sur la structure de tête (10) est une entaille (11).

7. Dispositif à deux pièces selon l'une quelconque des revendications 4 à 6, **caractérisé en ce que** la structure de tête (10) a un diamètre plus important en comparaison avec la partie apicale (3) de l'adaptateur (1), et qu'une surface (12) coudée contre la direction axiale de l'adaptateur se trouve à l'extrémité apicale de la structure de tête (10).

8. Dispositif à deux pièces selon l'une quelconque des revendications 4 à 7, **caractérisé en ce que** la structure de tête (10) comprend un renfoncement (19) en rond autour de la structure de tête (10) de l'adaptateur (1) s'étendant parallèlement à la surface (12) sur l'extrémité apicale de la structure de tête (10).

9. Dispositif à deux pièces selon l'une des revendications précédentes, **caractérisé en ce que** la face extérieure (15) de la bague antagoniste (13) présente des structures de fixation (16).

10. Dispositif à deux pièces selon la revendication 9, **caractérisé en ce que** les structures de fixation (16) sur la face extérieure (15) de la bague antagoniste (13) sont des évidements (16) dans la paroi extérieure de la bague.

11. Dispositif à deux pièces selon l'une des revendications précédentes, **caractérisé en ce que** l'adaptateur (1) et la bague antagoniste (13) présentent respectivement des moyens d'anti-rotation (18, 20, 24, 25) complémentaires.

12. Dispositif à deux pièces selon l'une des revendications précédentes, **caractérisé en ce que** l'adaptateur (1) et la bague antagoniste (13) sont raccordés entre eux de manière irréversible.

13. Dispositif à deux pièces selon la revendication 12, **caractérisé en ce qu'**au moins une fermeture à clip (18) est formée sur la surface intérieure (22) de la bague antagoniste (13), ladite fermeture à clip s'encliquetant lors de la disposition de la partie apicale (3) de l'adaptateur (1) dans la cavité centrale (14) de la bague antagoniste (13) dans au moins une structure complémentaire (20) sur la partie apicale (3) de l'adaptateur (1) et établit une connexion irréversible entre l'adaptateur (1) et la bague antagoniste (13), dans lequel la bague antagoniste (13) est mobile le long de la direction axiale de l'adaptateur (1).
